(19) Europäisches Patentamt / European Patent Office / Office européen des brevets

(11) **EP 4 379 607 A1**

(12) **EUROPEAN PATENT APPLICATION**
published in accordance with Art. 153(4) EPC

(43) Date of publication:
**05.06.2024 Bulletin 2024/23**

(21) Application number: **21952154.9**

(22) Date of filing: **02.08.2021**

(51) International Patent Classification (IPC):
**G06N 3/063** (2023.01)     **G06N 3/08** (2023.01)
**G06N 3/04** (2023.01)

(52) Cooperative Patent Classification (CPC):
**G06N 3/04; G06N 3/063; G06N 3/08**

(86) International application number:
**PCT/CN2021/110067**

(87) International publication number:
**WO 2023/010244 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **XIN, Chen
  Shenzhen, Guangdong 518129 (CN)**
• **YUAN, Honghui
  Shenzhen, Guangdong 518129 (CN)**
• **HON, Kwok Wai
  Shenzhen, Guangdong 518129 (CN)**
• **QIU, Feng
  Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **NEURAL NETWORK ACCELERATOR, AND DATA PROCESSING METHOD FOR NEURAL NETWORK ACCELERATOR**

(57)     This application provides a neural network accelerator and a data processing method for a neural network accelerator, and relates to the artificial intelligence (artificial intelligence, AI) field. The neural network accelerator includes a matrix unit and a post-processing unit, and the matrix unit is configured to perform a matrix operation in a neural network model; and the post-processing unit is configured to perform a vector operation on a result of the matrix operation by using at least one of a plurality of dedicated modules. In the solution in embodiments of this application, the vector operation is performed by using one or more dedicated modules, so that processing efficiency of the neural network model can be improved.

FIG. 5

**Description**

**TECHNICAL FIELD**

This application relates to data processing technologies in the artificial intelligence field, and in particular, to a neural network accelerator and a data processing method for a neural network accelerator.

**BACKGROUND**

Artificial intelligence (artificial intelligence, AI) is a theory, a method, a technology, or an application system that simulates, extends, and expands human intelligence by using a digital computer or a machine controlled by the digital computer, to sense an environment, obtain knowledge, and obtain an optimal result by using the knowledge. In other words, the artificial intelligence is a branch of computer science, and is intended to understand essence of intelligence and produce a new intelligent machine that can react in a manner similar to the human intelligence. The artificial intelligence is intended to study design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

As an important branch of artificial intelligence, a neural network (neural network, NN) is a network structure that simulates behavior features of an animal neural network for information processing, and is widely used in a plurality of fields such as image classification, image segmentation, target recognition, image enhancement, and audio recognition. Operations of the neural network mainly include two forms: a matrix operation and a vector operation. Currently, in most neural-network processing units, the vector operation is completed by using a general-purpose vector acceleration unit, for example, a vector processing unit (vector processing unit) in a tensor processing unit (tensor processing unit, TPU), a tensor processor core (tensor processor core, TPC) unit of Habana GoYA, or a single point data processor (single point data processor) of Nvidia. However, the general-purpose vector acceleration unit usually completes a specific type of vector operation in each clock cycle. When a vector operation amount in a neural network is large, an operation speed is greatly reduced, and overall performance is affected.

Therefore, how to improve processing efficiency of a neural network model becomes an urgent problem to be resolved.

**SUMMARY**

This application provides a neural network accelerator and a data processing method for a neural network accelerator, to improve processing efficiency of a neural network model.

According to a first aspect, a neural network accelerator is provided, including a matrix unit and a post-processing unit, where the matrix unit is configured to perform a matrix operation in a neural network model; and the post-processing unit is configured to perform a part of or all vector operations in the neural network model on a result of the matrix operation by using at least one of a plurality of dedicated modules, where one of the dedicated modules is configured to perform n vector operations, and n is a positive integer less than or equal to a first threshold.

Based on the solution in this embodiment of this application, vector operations in the neural network model are completed using one or more dedicated modules. When the neural network model includes steps of a plurality of vector operations, the plurality of vector operations may be completed using the plurality of dedicated modules respectively, thereby increasing a vector operation speed and further improving processing efficiency of the neural network model. In addition, using a vector calculation unit can be avoided as much as possible, thereby reducing a requirement for the vector calculation unit, helping optimize an area of the vector calculation unit, and improving performance and an energy efficiency ratio of the neural network accelerator. Further, decoupling from the vector calculation unit is facilitated. To be specific, no vector calculation unit is disposed in the neural network accelerator, and all vector operations in the neural network model are completed using one or more dedicated modules, thereby further improving performance and an energy efficiency ratio.

In addition, the post-processing unit is decoupled from an existing processor architecture, and is applicable to different neural-network processing unit architectures.

It should be noted that the plurality of dedicated modules are merely logical division. During specific implementation, some of the plurality of dedicated modules may share a same hardware circuit. In other words, a same hardware circuit may perform different vector operations based on different instructions.

With reference to the first aspect, in some implementations of the first aspect, the post-processing unit is configured to perform some vector operations in the neural network model on a result of the matrix operation by using at least one of a plurality of dedicated modules; and the neural network accelerator further includes a vector calculation unit, where the vector calculation unit is configured to perform remaining vector operations in the neural network model.

The vector calculation unit is a general-purpose processing module, and can implement various vector operations. When the plurality of dedicated modules in the post-processing unit cannot cover all vector operations in the neural network model, the vector calculation unit may complete a vector operation that cannot be performed by the post-processing unit.

With reference to the first aspect, in some implementations of the first aspect, the at least one dedicated module is determined based on a structure of the neural network model.

In the solution in this embodiment of this application, a dedicated module in the post-processing unit may be configured based on a requirement, to meet different vector operation requirements in a plurality of neural network models, so that the neural network accelerator is applicable to operations of the plurality of neural network models.

In other words, the at least one dedicated module is determined based on a network feature or an operation requirement of the neural network model. One or more dedicated modules may be selected from the plurality of dedicated modules based on an operation requirement of the neural network model, to perform a corresponding vector operation.

Optionally, the at least one enabled dedicated module is determined based on a structure of the neural network model.

The at least one dedicated module of the plurality of modules is enabled based on a structure of the neural network model to perform a corresponding vector operation.

Optionally, two ends of the plurality of dedicated modules include a bypass (bypass) connection line, and the enabled bypass connection line is determined based on a structure of the neural network model.

The bypass connection line is configured to bypass an unnecessary module.

One or more bypass connection lines are enabled based on a structure of the neural network model, to bypass an unnecessary module, so that the at least one dedicated module performs a corresponding vector operation.

With reference to the first aspect, in some implementations of the first aspect, the at least one dedicated module is indicated by an instruction or a parameter of a register in the post-processing unit.

With reference to the first aspect, in some implementations of the first aspect, the operations performed by the post-processing unit are determined based on a structure of the neural network model.

In other words, the post-processing unit is configured based on a vector operation that needs to be performed in an operation process of the neural network model, so that the post-processing unit performs a corresponding vector operation.

For example, when one of the at least one dedicated module is configured to perform a plurality of operations, the dedicated module may be configured to perform an operation that needs to be performed in the neural network in the plurality of operations.

With reference to the first aspect, in some implementations of the first aspect, the plurality of dedicated modules include at least one of the following: a quantization module, an element-wise operation module, a bias operation module, an activation function module, or a pooling module, where the quantization module is configured to perform at least one of the following operations on data input to the quantization module: a quantization operation, a dequantization operation, or a weighting operation, where the data input to the quantization module is determined based on the result of the matrix operation; the element-wise operation module is configured to perform an element-wise operation on data input to the element-wise operation module, where the data input to the element-wise operation module is determined based on the result of the matrix operation; the bias operation module is configured to perform a bias operation on data input to the bias operation module, where the data input to the bias operation module is determined based on the result of the matrix operation; the activation function module is configured to process, according to an activation function, data input to the activation function module, where the data input to the activation function module is determined based on the result of the matrix operation; and the pooling module is configured to perform pooling processing on data input to the pooling module, where the data input to the pooling module is determined based on the result of the matrix operation.

In the solution in this embodiment of this application, the plurality of dedicated modules can support operations of more types of neural network models, thereby improving flexibility of the neural network accelerator.

With reference to the first aspect, in some implementations of the first aspect, the quantization module includes a first quantization module and a second quantization module, and the activation function module includes a first activation function module and a second activation function module; and the plurality of dedicated modules are connected in the following sequence: the bias operation module, the first quantization module, the first activation function module, the pooling module, the element-wise operation module, the second activation function module, and the second quantization module.

In this embodiment of this application, a connection sequence of the dedicated modules and a connection sequence obtained by bypassing or enabling some dedicated modules can support most post-processing procedures, and cover most neural network requirements. Using a vector calculation unit is avoided as much as possible, thereby helping optimize an area of the vector calculation unit, and improving performance and an energy efficiency ratio of the neural network accelerator. Further, decoupling from the vector calculation unit is facilitated. To be specific, no vector calculation unit is disposed in the neural network accelerator, and all vector operations in the neural network model are completed using one or more dedicated modules, thereby further improving performance and an energy efficiency ratio.

With reference to the first aspect, in some implementations of the first aspect, the pooling module and the element-wise operation module share a hardware module.

With reference to the first aspect, in some implementations of the first aspect, when the activation function module uses an activation function of a rectified linear unit (rectified linear unit, RELU) type, the activation function module and the quantization module share a hardware module.

In this embodiment of this application, a multiplication operation used in the RELU-type activation function and a multiplication operation in an operation of a quantization type are combined and merged into one multiplication operation by using parameters, so that the activation function module and the quantization module can share a hardware module, thereby reducing a requirement for operators, reducing costs, and reducing power consumption.

With reference to the first aspect, in some implementations of the first aspect, the quantization module is configured to perform any one of the following operations: a quantization operation, a dequantization operation, or a weighting operation.

With reference to the first aspect, in some implementations of the first aspect, the activation function module is configured to perform an operation of an activation function or an operation of a lookup table.

In other words, the activation function module may use an operation circuit. For example, the activation function module may use a multiplication circuit to perform an operation of the RELU-type activation function.

Alternatively, the activation function module may be provided with no operation circuit, but obtain a processing result of the activation function by using a lookup table. In this way, calculation of more types of nonlinear activation functions can be implemented.

With reference to the first aspect, in some implementations of the first aspect, the activation function module is configured to perform any one of the following operations: an operation of a rectified linear unit RELU, an operation of a parametric rectified linear unit (parametric rectified linear unit, PRELU), or an operation of a leaky rectified linear unit (Leaky-RELU).

With reference to the first aspect, in some implementations of the first aspect, the plurality of dedicated modules support a multi-level pipeline processing manner.

When the neural network includes steps of a plurality of vector operations, dedicated modules corresponding to the plurality of vector operations may process data in a multi-level pipeline parallel manner.

When the neural network includes steps of a plurality of vector operations, for example, includes steps such as a quantization operation, an operation of an RELU, and a pooling operation, the plurality of dedicated modules in this embodiment of this application may enable the plurality of operations to be performed in a pipeline parallel manner, thereby improving performance of the neural network accelerator.

In addition, in this embodiment of this application, the plurality of dedicated modules complete the plurality of operations in the multi-level pipeline manner, and there is no need to write a vector operation into a buffer each time the vector operation is performed. This can reduce a quantity of times of read/write for the buffer, reduce power consumption, and help improve an energy efficiency ratio.

With reference to the first aspect, in some implementations of the first aspect, the post-processing unit is specifically configured to: perform, in a process of moving the result of the matrix operation from a memory of the matrix unit to another memory, a vector operation on the result of the matrix operation by using the at least one dedicated module.

In other words, the post-processing unit may be used as a data path between the memory in the matrix unit and the another memory, to implement associated movement. In other words, in a process of moving data, the post-processing unit performs a vector operation in an associated manner.

"Associated" execution means that a related operation is performed during data movement. Each of the plurality of dedicated modules may support "associated" execution.

When the post-processing unit can support associated movement, the post-processing unit and the matrix unit can process data in parallel. Particularly, when the plurality of dedicated modules support a multi-level pipeline processing manner, the post-processing unit and the matrix unit basically do not generate additional time overheads in a process of processing data in parallel, thereby further improving performance of the neural network accelerator.

With reference to the first aspect, in some implementations of the first aspect, the post-processing unit is specifically configured to: remove, in the process of moving the result of the matrix operation from the memory of the matrix unit to the another memory, invalid data from the result of the matrix operation.

The deleting invalid data in the result of the matrix operation in the associated manner means deleting invalid data in the result of the matrix operation when the result of the matrix operation is moved from the memory of the matrix unit.

The invalid data may also be referred to as dummy (dummy) data or junk data.

With reference to the first aspect, in some implementations of the first aspect, a plurality of elements in the result of the matrix operation are arranged based on a first location relationship, and the post-processing unit is further configured to arrange the plurality of elements based on a second location relationship, to obtain a target result.

Alternatively, a data format conversion operation may also be referred to as a data rearrangement operation.

With reference to the first aspect, in some implementations of the first aspect, a quantity of channels for the result of the matrix operation is greater than a quantity of channels for the target result, a height of the result of the matrix operation is less than a height of the target result, and a width of the result of the matrix operation is less than a width of the target result.

With reference to the first aspect, in some implementations of the first aspect, the result of the matrix operation is an output result of a convolution operation obtained according to a Winograd algorithm, and the target result is an output result of the convolution operation.

With reference to the first aspect, in some implementations of the first aspect, the post-processing unit may be further configured to perform a bit width conversion operation on floating-point data.

In other words, the post-processing unit may be further configured to perform a precision conversion operation on floating-point data.

According to a second aspect, a data processing method for a neural network accelerator is provided. The neural network accelerator includes a matrix unit and a post-processing unit, and the method includes: The matrix unit performs a matrix operation in a neural network model; and the post-processing unit performs a part of or all vector operations in the neural network model on a result of the matrix operation by using at least one of a plurality of dedicated modules, where one of the dedicated modules is configured to perform n vector operations, and n is a positive integer less than or equal to a first threshold.

Based on the solution in this embodiment of this application, vector operations in the neural network model are completed using one or more dedicated modules. When the neural network model includes steps of a plurality of vector operations, the plurality of vector operations may be completed using the plurality of dedicated modules respectively, thereby improving processing efficiency of the neural network model. In addition, using a vector calculation unit can be avoided as much as possible, thereby reducing a requirement for the vector calculation unit, helping optimize an area of the vector calculation unit, and improving performance and an energy efficiency ratio of the neural network accelerator. Further, decoupling from the vector calculation unit is facilitated. To be specific, no vector calculation unit is disposed in the neural network accelerator, and all vector operations in the neural network model are completed using one or more dedicated modules, thereby further improving performance and an energy efficiency ratio.

In addition, the post-processing unit is decoupled from an existing processor architecture, and is applicable to different neural-network processing unit architectures.

With reference to the second aspect, in some implementations of the second aspect, the at least one dedicated module is determined based on a structure of the neural network model.

With reference to the second aspect, in some implementations of the second aspect, the at least one dedicated module is indicated by an instruction or a parameter of a register in the post-processing unit.

With reference to the second aspect, in some implementations of the second aspect, the plurality of dedicated modules include at least one of the following: a quantization module or an element-wise operation module, where the quantization module is configured to perform at least one of the following operations on data input to the quantization module: a quantization operation, a dequantization operation, or a weighting operation, where the data input to the quantization module is determined based on the result of the matrix operation; or the element-wise operation module is configured to perform an element-wise operation on data input to the element-wise operation module, where the data input to the element-wise operation module is determined based on the result of the matrix operation.

With reference to the second aspect, in some implementations of the second aspect, the plurality of dedicated modules further include at least one of the following: a bias operation module, an activation function module, or a pooling module, where the bias operation module is configured to perform a bias operation on data input to the bias operation module, where the data input to the bias operation module is determined based on the result of the matrix operation; the activation function module is configured to process, according to an activation function, data input to the activation function module, where the data input to the activation function module is determined based on the result of the matrix operation; and the pooling module is configured to perform pooling processing on data input to the pooling module, where the data input to the pooling module is determined based on the result of the matrix operation.

With reference to the second aspect, in some implementations of the second aspect, the quantization module includes a first quantization module and a second quantization module, and the activation function module includes a first activation function module and a second activation function module; and the plurality of dedicated modules in the post-processing unit are connected in the following sequence: the bias operation module, the first quantization module, the first activation function module, the pooling module, the element-wise operation module, the second activation function module, and the second quantization module.

With reference to the second aspect, in some implementations of the second aspect, the quantization module performs any one of the following operations: a quantization operation, a dequantization operation, or a weighting operation.

With reference to the second aspect, in some implementations of the second aspect, the activation function module performs any one of the following operations: an operation of an RELU, an operation of a PRELU, or an operation of a Leaky-RELU.

With reference to the second aspect, in some implementations of the second aspect, that the post-processing unit processes a result of the matrix operation by using at least one of a plurality of dedicated modules includes that the at least one dedicated module supports processing the result of the matrix operation in a multi-level pipeline processing manner.

With reference to the second aspect, in some implementations of the second aspect, that the post-processing unit processes a result of the matrix operation by using at least one of a plurality of dedicated modules includes that the post-processing unit performs, in a process of moving the result of the matrix operation from a memory of the matrix unit to another memory, a vector operation on the result of the matrix operation by using the at least one dedicated module.

With reference to the second aspect, in some implementations of the second aspect, the post-processing unit removes, in the process of moving the result of the matrix operation from the memory of the matrix unit to the another memory, invalid data from the result of the matrix operation.

With reference to the second aspect, in some implementations of the second aspect, a plurality of elements in the result of the matrix operation are arranged based on a first location relationship, and the method further includes: The post-processing unit arranges the plurality of elements based on a second location relationship, to obtain a target result.

With reference to the second aspect, in some implementations of the second aspect, a quantity of channels for the result of the matrix operation is greater than a quantity of channels for the target result, a height of the result of the matrix operation is less than a height of the target result, and a width of the result of the matrix operation is less than a width of the target result.

With reference to the second aspect, in some implementations of the second aspect, the result of the matrix operation is an output result of a convolution operation obtained according to a Winograd algorithm, and the target result is an output result of the convolution operation.

It should be understood that extension, limitation, explanation, and description of related content in the first aspect are also applicable to same content in the second aspect.

According to a third aspect, a neural network accelerator is provided, including a memory, configured to store a program; and a processor, configured to execute the program stored in the memory, where when the program stored in the memory is executed, the processor is configured to perform the method according to the second aspect or any implementation of the second aspect.

The processor in the third aspect may be a central processing unit (central processing unit, CPU), or may be a combination of a CPU and a neural network operation processor. The neural network operation processor herein may include a graphics processing unit (graphics processing unit, GPU), a neural-network processing unit (neural-network processing unit, NPU), a tensor processing unit (tensor processing unit, TPU), and the like. The TPU is an artificial intelligence accelerator-specific integrated circuit customized by Google (Google) for machine learning.

According to a fourth aspect, a computer-readable storage medium is provided. The computer-readable storage medium stores program code to be executed by a device, and the program code includes used to perform the method according to the second aspect or any implementation of the second aspect.

According to a fifth aspect, a computer program product including instructions is provided. When the computer program product is run on a computer, the computer is enabled to perform the method according to the second aspect or any implementation of the second aspect.

According to a sixth aspect, a chip is provided. The chip includes a processor and a data interface. The processor reads, through the data interface, instructions stored in a memory to perform the method according to the second aspect or any implementation of the second aspect.

Optionally, in an implementation, the chip may further include the memory, and the memory stores the instructions. The processor is configured to execute the instructions stored in the memory, and when the instructions are executed, the processor is configured to perform the method according to the second aspect or any implementation of the second aspect.

According to a seventh aspect, a system on a chip (system on a chip, SoC) is provided. The SoC includes the neural network accelerator according to the first aspect or any implementation of the first aspect.

According to an eighth aspect, an electronic device is provided. The electronic device includes the neural network accelerator according to the first aspect or any implementation of the first aspect.

**BRIEF DESCRIPTION OF DRAWINGS**

FIG. 1 is a schematic diagram of a system architecture according to an embodiment of this application;

FIG. 2 is a schematic diagram of a structure of a convolutional neural network according to an embodiment of this application;

FIG. 3 is a schematic diagram of a structure of a convolutional neural network according to an embodiment of this application;

FIG. 4 is a schematic block diagram of a chip according to an embodiment of this application;

FIG. 5 is a schematic block diagram of a neural network accelerator according to an embodiment of this application;

FIG. 6 a schematic block diagram of a connection relationship between a plurality of dedicated modules according to an embodiment of this application;

FIG. 7 is a schematic block diagram of a post-processing unit according to an embodiment of this application;

FIG. 8 is a schematic diagram of invalid data according to an embodiment of this application;

FIG. 9 is a schematic diagram of an RELU-type activation function according to an embodiment of this application;

FIG. 10 is a schematic diagram of a data format conversion process according to an embodiment of this application;

FIG. 11 is a schematic diagram of a pooling process according to an embodiment of this application;

FIG. 12 is a schematic diagram of another pooling process according to an embodiment of this application;

FIG. 13 is a schematic diagram of an element-wise operation process according to an embodiment of this application;

FIG. 14 is a schematic diagram of a vector operation procedure according to an embodiment of this application;

FIG. 15 is a schematic diagram of a depth2space conversion operation according to an embodiment of this application;

FIG. 16 is a flowchart of a data processing method according to an embodiment of this application; and

FIG. 17 is a schematic diagram of a neural network accelerator according to an embodiment of this application.

## DESCRIPTION OF EMBODIMENTS

The following describes technical solutions of this application with reference to the accompanying drawings.

Because embodiments of this application relate to massive application of a neural network, for ease of understanding, the following describes terms and concepts related to the neural network that may be used in embodiments of this application.

(1) Neural network

The neural network may include a neuron. The neuron may be an operation unit that uses $x_s$ and an intercept of 1 as input. Output of the operation unit may be as follows:

$$h_{W,b}\left(x\right) = f\left(W^T x\right) = f\left(\sum\nolimits_{s=1}^{n} W_s x_s + b\right) \quad (1\text{-}1)$$

s=1, 2, ..., or n, n is a natural number greater than 1, $W_s$ is a weight of $x_s$, and b is a bias of the neuron.

f is an activation function (activation function) of the neuron, which is used to introduce a nonlinear feature into the neural network, to convert an input signal in the neuron into an output signal. The output signal of the activation function may be used as an input of a next layer. For example, the activation function may be a rectified linear unit (rectified linear unit, RELU), a tanh function, or a sigmoid function.

The neural network is a network formed by connecting a plurality of single neurons together. To be specific, output of a neuron may be input of another neuron. An input of each neuron may be connected to a local receptive field of a previous layer to extract a feature of the local receptive field. The local receptive field may be a region including several neurons.

(2) Deep neural network

A deep neural network (deep neural network, DNN), also referred to as a multi-layer neural network, may be understood as a neural network having a plurality of hidden layers. The DNN is divided based on locations of different layers, so that the neural network in the DNN can be divided into three types: an input layer, hidden layers, and an output layer. Generally, the first layer is the input layer, the last layer is the output layer, and all intermediate layers are the hidden layers. Layers are fully connected. To be specific, any neuron at an $i^{th}$ layer is necessarily connected to any neuron at an $(i+1)^{th}$ layer.

The DNN seems complex, but is actually not complex in terms of work of each layer, and is simply the following linear relationship expression: $\vec{y} = \alpha(W\vec{x} + \vec{b})$, where $\vec{x}$ is an input vector, $\vec{y}$ is an output vector, $\vec{b}$ is a bias vector, $W$ is a weight matrix (also referred to as a coefficient), and $\alpha(\ )$ is an activation function. At each layer, the output vector $\vec{y}$ is obtained by merely performing such a simple operation on the input vector $\vec{x}$. Because the DNN includes a large quantity of layers, there are also a large quantity of coefficients $W$ and bias vectors $\vec{b}$. Definitions of these parameters in the DNN are as follows: The coefficient $W$ is used as an example. It is assumed that in a DNN having three layers, a linear coefficient from the fourth neuron at the second layer to the second neuron at the third layer is defined as $W_{42}^{3}$. The superscript 3 indicates a layer at which the coefficient $W$ is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{kj}^{L}$.

It should be noted that the input layer does not have the parameter $W$. In the deep neural network, more hidden layers make the network more capable of describing a complex case in the real world. Theoretically, a model with more parameters has higher complexity and a larger "capacity". It indicates that the model can complete a more complex learning task. A process of training the deep neural network is a process of learning a weight matrix, and a final objective of training is to obtain weight matrices (weight matrices formed by vectors at many layers) of all layers of a trained deep neural network.

(3) Convolutional neural network

A convolutional neural network (convolutional neural network, CNN) is a deep neural network with a convolutional structure. The convolutional neural network includes a feature extractor that includes a convolutional layer and a sampling sublayer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neurons that are in a rectangular arrangement. Neurons at a same feature plane share a weight, and the weight shared herein is a convolution kernel. Weight sharing may be understood as that an image information extraction manner is irrelevant to a location. The convolution kernel may be initialized in a form of a matrix of a random size. In a training process of the convolutional neural network, an appropriate weight may be obtained for the convolution kernel through learning. In addition, benefits directly brought by weight sharing are that connections among layers of the convolutional neural network are reduced, and an overfitting risk is reduced.

Computation of the convolutional neural network mainly includes a matrix operation and a vector operation. In the convolutional neural network, the matrix operation may also be understood as a convolution operation. For example, the vector operation includes a bias (bias) operation, quantization, dequantization, weighting, batch normalization (batch normalization, BN), an element-wise (element-wise) operation, pooling (pooling), a nonlinear activation function, or the like. In addition, some convolutional neural networks, for example, a convolutional neural network of an image enhancement type, usually include an operation of extending a depth (depth) dimension of a feature map (feature map) obtained after matrix calculation to a space (space) dimension, to improve image quality without increasing a calculation amount.

During actual application, the convolutional neural network may be divided into two phases: a training (training) phase and an inference (inference) phase. The objective of the training phase is to obtain a network with high precision and a low computing power requirement, and is less sensitive to training time consumption. In the training phase, after a network structure that meets a requirement of an actual application scenario is constructed, a high-precision floating-point data type is usually used to complete training of parameters of a model, to improve precision of the model. In the inference phase, the trained network is deployed in the actual application scenario, and parameters of the model are quantized. For example, a fixed-point operation is used to replace a floating-point operation, to improve energy efficiency; and operators in the model may be further merged to simplify an operation procedure, thereby improving a running speed and reducing energy consumption without affecting precision of the model significantly. In other words, for a same model, specific operation manners involved in different phases may be the same or different, and may be set based on a situation to meet different requirements of the phases.

(4) Winograd algorithm

The Winograd algorithm is a common fast convolution calculation method, and can greatly reduce a quantity of matrix multiplication calculation times without affecting a calculation result, reduce a calculation amount of a convolution operation, and improve calculation efficiency. The Winograd algorithm is essentially to combine multiplication operations, add addition and subtraction operations, and reduce multiplication operations to improve energy efficiency.

The Winograd algorithm meets the following formula:

$$Y = A^T[[GgG^T]\odot[B^TdB]]A$$

Y represents an output data matrix; g represents a convolution kernel, that is, a weight matrix; d represents a title (title) of an input feature map, that is, an input data matrix; and O represents element-wise multiplication (element-wise multiplication), that is, point multiplication between matrices. Each of A, G, and B represents a transformation matrix. Specifically, A represents an output transformation matrix, $A^T$ represents a transposed matrix of A, G represents a weight transformation matrix, $G^T$ represents a transposed matrix of G, B represents an input transformation matrix, and $B^T$ represents a transposed matrix of B. In the inference process of the neural network, g does not change. Therefore, the transformed weight matrix $\hat{g} = GgG^T$ may be pre-calculated, that is, before forward calculation starts, the transformed weight matrix is pre-calculated. In this way, power consumption of operations of the neural network model can be further reduced.

A Winograd algorithm such as F(m, r) is used to quickly calculate a convolution operation in which a size of a convolution kernel is r and a size of an output feature map is m. The size may also be understood as a dimension.

A transformation matrix may be determined based on a dimension and a stride (stride) of a convolution kernel. In other words, each combination of B, G, and A for a convolution kernel of a specific size and a stride is fixed, and may be deduced according to the Winograd algorithm.

During actual application, a common form of the Winograd algorithm is $F(2\times2,3\times3)$, an output data matrix Y is a matrix of 2×2, a weight matrix g is a matrix of 3×3 , an input data matrix is a matrix of 4×4, and a stride is 1.

For a combination of the weight matrix 3×3 and the stride of 1, the transformation matrix meets the following formula:

$$A = \begin{bmatrix} 1 & 0 \\ 1 & 1 \\ 1 & -1 \\ 0 & -1 \end{bmatrix} \quad G = \begin{bmatrix} 1 & 0 & 0 \\ \dfrac{1}{2} & \dfrac{1}{2} & \dfrac{1}{2} \\ \dfrac{1}{2} & -\dfrac{1}{2} & \dfrac{1}{2} \\ 0 & 0 & 1 \end{bmatrix}; \text{ and } \quad B = \begin{bmatrix} 1 & 0 & 0 & 0 \\ 0 & 1 & -1 & 1 \\ -1 & 1 & 1 & 0 \\ 0 & 0 & 0 & -1 \end{bmatrix}.$$

The following describes the calculation process of the Winograd algorithm of $F(2\times2,3\times3)$ using an example.

(1) Forward transformation of the input data matrix of 4×4.

Specifically, the input data matrix d of 4×4 is transformed by using the input transformation matrix B of 4×4, to obtain the transformed input data matrix $\hat{d} = B^TdB$ of 4×4.

For example, the input data matrix d meets the following formula:

$$d = \begin{bmatrix} 1 & 1 & 1 & 0 \\ 0 & 1 & 1 & 1 \\ 0 & 0 & 1 & 1 \\ 0 & 0 & 1 & 1 \end{bmatrix}$$

The transformed input data matrix meets the following formula:

$$\hat{d} = B^TdB = \begin{bmatrix} 1 & 1 & -1 & 2 \\ -2 & 3 & 1 & -1 \\ 1 & -1 & 1 & -1 \\ 0 & 1 & -1 & 1 \end{bmatrix}$$

(2) Forward transformation of the convolution kernel of 3×3.

Specifically, the weight matrix g of 3×3 is transformed by using the weight transformation matrix G of 4×3, to obtain the transformed weight matrix $\hat{g} = GgG^T$ of 4×4.

For example, the weight matrix g meets the following formula:

$$g = \begin{bmatrix} 1 & 0 & 1 \\ 0 & 1 & 0 \\ 1 & 0 & 1 \end{bmatrix}$$

The transformed weight matrix meets the following formula:

$$\hat{g} = \begin{bmatrix} 1 & 1 & 1 & 1 \\ 1 & 5/4 & 3/4 & 1 \\ 1 & 3/4 & 5/4 & 1 \\ 1 & 1 & 1 & 1 \end{bmatrix}$$

(3) Element-wise multiplication of 16 elements.

Specifically, an element-wise multiplication operation is performed on the transformed input data matrix and the transformed weight matrix, that is, elements in corresponding locations in the two matrices are multiplied to obtain an intermediate matrix $\hat{y} = \hat{g} \odot \hat{d}$ of 4×4.

(4) Inverse transformation of the intermediate matrix of 4×4.

Specifically, the intermediate matrix is transformed by using the output transformation matrix A of 4×2, to obtain the output data matrix $Y = A^T\hat{y}A$ of 2×2. The output matrix is a result of convolution calculation performed on the input data matrix d and the weight matrix g.

If four results in the output data matrix are obtained by performing a convolution operation, nine (3*3) multiplication operations are required for each result, and 36 multiplication operations are required for the four results. If the Winograd algorithm is used, in addition to the transformation overheads, only 16 (4*4) multiplication operations in step (3) are required, and an acceleration ratio of quantities of multiplication times reaches 2.25 (36/16). Elements in the transformation matrix are all values of 0, ±1, and ±1/2, and may be completed by performing lightweight hardware operations such as a sign bit transformation operation and a shift operation. In other words, transformation overheads are usually small.

Theoretically, the Winograd algorithm can improve the performance by 2.25 times without affecting the calculation result.

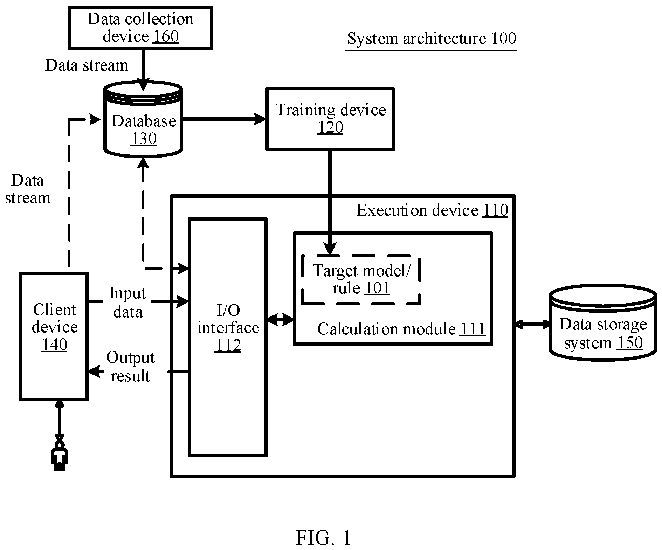

As shown in FIG. 1, an embodiment of this application provides a system architecture 100. In FIG. 1, a data collection device 160 is configured to collect training data. The training data is related to a task of a model. After collecting the training data, the data collection device 160 stores the training data in a database 130, and a training device 120 obtains a target model/rule 101 through training based on the training data maintained in the database 130.

The following describes how the training device 120 obtains the target model/rule 101 based on the training data. The training device 120 processes the input training data to obtain a predicted value, and compares the predicted value with a target value until a difference between the predicted value that is output by the training device 120 and the target value is less than a specific threshold, to complete training of the target model/rule 101.

The training device 120 may obtain the target model/rule 101 through training by using a neural network accelerator in embodiments of this application.

The target model/rule 101 in this embodiment of this application may be specifically a neural network model, for example, a convolutional neural network. It should be noted that during actual application, the training data maintained in the database 130 is not necessarily all collected by the data collection device 160, or may be received from another device. It should be further noted that the training device 120 may not necessarily train the target model/rule 101 completely based on the training data maintained in the database 130, or may obtain training data from a cloud or another place to perform model training. The foregoing descriptions should not be construed as a limitation on embodiments of this application.

The target model/rule 101 obtained through training by the training device 120 can be applied to different systems or devices, for example, applied to an execution device 110 shown in FIG. 1. The execution device 110 may be a terminal such as a mobile phone terminal, a tablet computer, a notebook computer, an augmented reality (augmented reality, AR) AR/virtual reality (virtual reality, VR), or a vehicle terminal; or may be a server, a cloud, or the like. In FIG. 1, an input/output (input/output, I/O) interface 112 is configured for the execution device 110, and is configured to exchange data with an external device. A user may input data to the I/O interface 112 by using a client device 140.

In a process in which the execution device 110 preprocesses the input data, or in a process in which a calculation module 111 of the execution device 110 performs related processing such as computing, the execution device 110 may invoke data, code, and the like in a data storage system 150 for corresponding processing, and may further store, in the data storage system 150, data, an instruction, and the like that are obtained through the corresponding processing. The calculation module 111 processes the input data by using the target model/rule 101.

Specifically, the calculation module 111 may execute the target model/rule 101 by using the neural network accelerator in embodiments of this application.

Finally, the I/O interface 112 returns a processing result to the client device 140, and provides the processing result to the user.

It should be noted that the training device 120 may generate, for different targets or different tasks, corresponding target models/rules 101 based on different training data. The corresponding target models/rules 101 may be used to achieve the foregoing targets or complete the foregoing tasks, to provide a required result for the user.

In a case shown in FIG. 1, the user may manually provide the input data. The manually providing may be performed by using a screen provided on the I/O interface 112. In another case, the client device 140 may automatically send input data to the I/O interface 112. If it is required that the client device 140 needs to obtain authorization from the user to automatically send the input data, the user may set corresponding permission on the client device 140. The user may view, on the client device 140, a result output by the execution device 110. Specifically, the result may be presented in a form of displaying, a sound, an action, or the like. The client device 140 may alternatively be used as a data collection end, to collect, as new sample data, input data that is input to the I/O interface 112 and an output result that is output from the I/O interface 112 that are shown in the figure, and store the new sample data in the database 130. It is clear that the client device 140 may alternatively not perform collection. Instead, the I/O interface 112 directly stores, in the database 130 as new sample data, the input data input to the I/O interface 112 and the output result output from the I/O interface 112.

It should be noted that FIG. 1 is merely a schematic diagram of a system architecture according to an embodiment of this application. A location relationship between the devices, the components, the modules, and the like shown in the figure does not constitute any limitation. For example, in FIG. 1, the data storage system 150 is an external memory relative to the execution device 110, but in another case, the data storage system 150 may alternatively be disposed in the execution device 110.

As shown in FIG. 1, the target model/rule 101 is obtained based on training by the training device 120. The target model/rule 101 may be a neural network in this embodiment of this application. Specifically, the neural network in this embodiment of this application may be a CNN, a deep convolutional neural network (deep convolutional neural networks, DCNN), or the like.

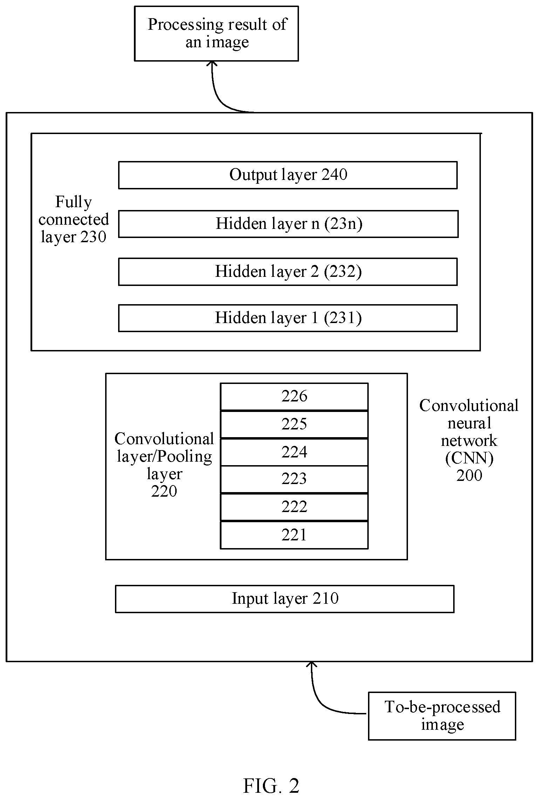

Because the CNN is a very common neural network, a structure of the CNN is mainly described in detail below with reference to FIG. 2. As described in the foregoing description of basic concepts, the convolutional neural network is a deep neural network with a convolutional structure, and is a deep learning (deep learning) architecture. The deep learning architecture is to perform multi-level learning at different abstract levels by using a neural network model update algorithm. As a deep learning architecture, the CNN is a feedforward (feedforward) artificial neural network, and neurons in the feedforward artificial neural network may respond to an input image.

In FIG. 2, a convolutional neural network (CNN) 200 may include an input layer 210, a convolutional layer/pooling layer 220 (the pooling layer is optional), and a fully connected layer 230. The input layer 210 may obtain a to-be-processed image, and send the obtained to-be-processed image to the convolutional layer/pooling layer 220 and the following fully connected layer 230 for processing, to obtain a processing result of the image. The following describes in detail an internal layer structure of the CNN 200 in FIG. 2.

Convolutional layer/Pooling layer 220:

Convolutional layer:

As shown in FIG 2, the convolutional layer/pooling layer 220 may include, for example, layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the layer 223 is a pooling layer, the layers 224 and 225 are convolutional layers, and the layer 226 is a pooling layer. To be specific, an output of a convolutional layer may be used as an input of a following pooling layer, or may be used as an input of another convolutional layer to continue a convolution operation.

The following uses the convolutional layer 221 as an example to describe an internal working principle of one convolutional layer.

The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (or two pixels, depending on a value of a stride (stride)) in a horizontal direction on an input image, to extract a specific feature from the image. A size of the weight matrix needs to be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows x columns), namely, a plurality of same-class matrices, are used. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and a further weight matrix is used to blur unnecessary noise in the image. The plurality of weight matrices have the same size (rows x columns), and convolutional feature maps extracted from the plurality of weight matrices with the same size have a same size. Then, the plurality of extracted convolutional feature maps with the same size are combined to form an output of the convolution operation.

Weight values in these weight matrices need to be obtained through a lot of training during actual application. Each weight matrix formed by using the weight values obtained through training may be used to extract information from an input image, to enable the convolutional neural network 200 to perform correct prediction.

When the convolutional neural network 200 has a plurality of convolutional layers, a large quantity of general features are usually extracted at an initial convolutional layer (for example, 221). The general feature may also be referred to as a low-level feature. As the depth of the convolutional neural network 200 increases, a feature extracted at a subsequent convolutional layer (for example, 226) becomes more complex, for example, a high-level semantic feature. A feature with higher semantics is more applicable to a to-be-resolved problem.

Pooling layer:

Because a quantity of training parameters usually needs to be reduced, pooling layers usually need to be periodically introduced after the convolutional layers. For the layers 221 to 226 of 220 in FIG. 2, there may be one pooling layer following one convolutional layer, or one or more pooling layers following a plurality of convolutional layers. During image processing, the pooling layer is only used to reduce a space size of the image. The pooling layer may include an average pooling operator and/or a maximum pooling operator, to perform sampling on the input image to obtain an image with a small size. The average pooling operator may be used to calculate pixel values in the image in a specific range, to generate an average value. The average value is used as an average pooling result. The maximum pooling operator may be used to select a pixel with a maximum value in a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

Fully connected layer 230:

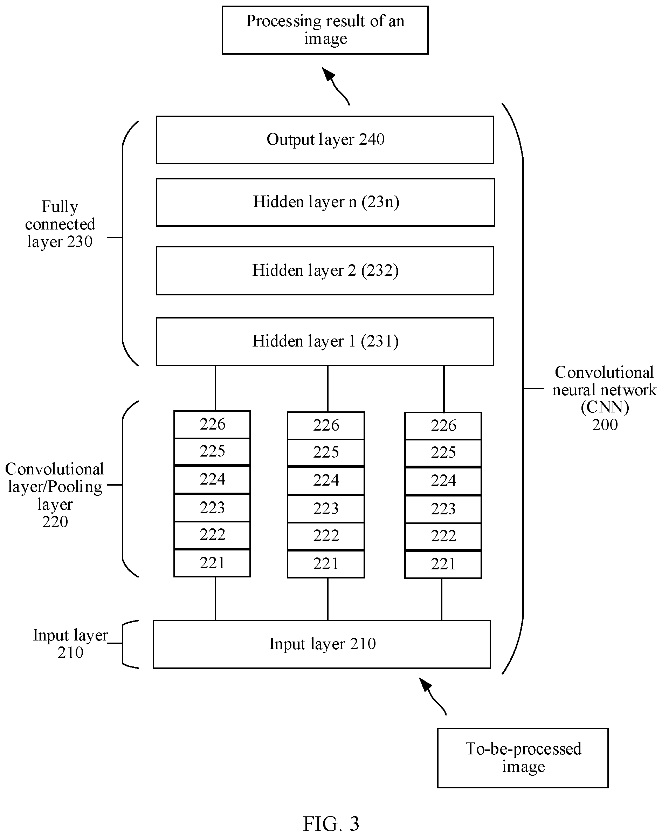

After processing performed at the convolutional layer/pooling layer 220, the convolutional neural network 200 is not ready to output required output information. As described above, at the convolutional layer/pooling layer 220, only a feature is extracted, and parameters resulting from an input image are reduced. However, to generate final output information (required class information or other related information), the convolutional neural network 200 needs to use the fully connected layer 230 to generate an output of one required class or outputs of a group of required classes. Therefore, the fully connected layer 230 may include a plurality of hidden layers (231 and 232 to 23n shown in FIG. 3) and an output layer 240. Parameters included in the plurality of hidden layers may be obtained through pre-training based on related training data of a specific task type. For example, the task type may include image recognition, image classification, super-resolution image reconstruction, and the like.

At the fully connected layer 230, the plurality of hidden layers are followed by the output layer 240, namely, a last layer of the entire convolutional neural network 200. The output layer 240 has a loss function similar to a categorical cross entropy, and the loss function is specifically configured to calculate a prediction error. Once forward propagation (for example, propagation in a direction from 210 to 240 in FIG. 3 is forward propagation) of the entire convolutional neural network 200 is completed, back propagation (for example, propagation in a direction from 240 to 210 in FIG. 3 is back propagation) is started to update a weight value and a deviation of each layer mentioned above, to reduce a loss of the convolutional neural network 200 and an error between a result output by the convolutional neural network 200 by using the output layer and an ideal result.

For example, a structure of a neural network specifically used in this embodiment of this application may be shown in FIG. 3. In FIG. 3, a convolutional neural network (CNN) 200 may include an input layer 210, a convolutional layer/pooling layer 220 (the pooling layer is optional), and a fully connected layer 230. Compared with FIG. 2, a plurality of convolutional layers/pooling layers in the convolutional layer/pooling layer 220 in FIG. 3 are parallel, and input all respectively extracted features to the fully connected layer 230 for processing.

It should be noted that the convolutional neural networks shown in FIG. 2 and FIG. 3 are merely used as examples of two possible convolutional neural networks in this embodiment of this application. In specific application, the neural network in this embodiment of this application may alternatively exist in a form of another network model. In other words, the neural network accelerator in embodiments of this application may further perform an operation of a neural network in a form of another network model.

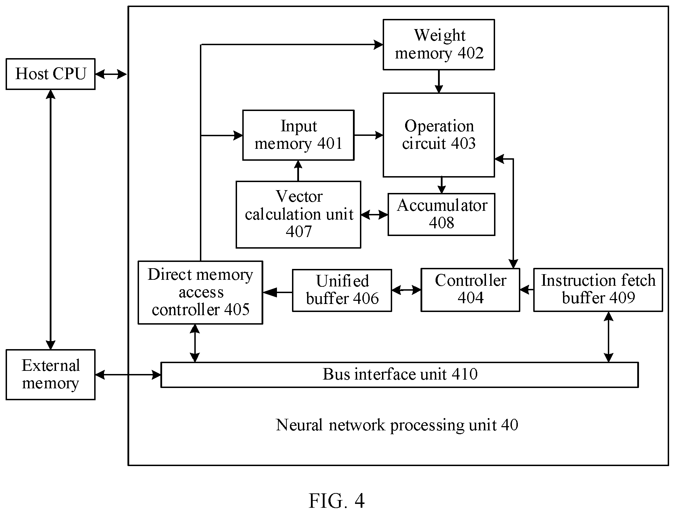

FIG. 4 shows a hardware structure of a chip according to an embodiment of this application. The chip includes a neural-network processing unit (neural-network processing unit, NPU) 40. The chip may be disposed in the execution device 110 shown in FIG. 1, to complete calculation work of the calculation module 111. The chip may alternatively be disposed in the training device 120 shown in FIG. 1, to complete training work of the training device 120 and output the target model/rule 101. An algorithm at each layer in the convolutional neural networks shown in FIG. 2 and FIG. 3 may be implemented in the chip shown in FIG. 4.

The NPU 40 is mounted to a host central processing unit (central processing unit, CPU) (host CPU) as a coprocessor, and the host CPU allocates tasks. A core part of the NPU is an operation circuit 403. A controller 404 controls the operation circuit 403 to extract data in a memory (a weight memory or an input memory) and perform an operation.

The controller 404 controls the operation circuit 403 to extract data in a memory (a weight memory or an input memory) and perform an operation.

In some implementations, the operation circuit 403 internally includes a plurality of processing engines (processing engines, PEs). In some implementations, the operation circuit 403 is a two-dimensional systolic array. The operation circuit 403 may alternatively be a one-dimensional systolic array or another electronic circuit capable of performing mathematical operations such as multiplication and addition. In some implementations, the operation circuit 403 is a general-purpose matrix processor.

For example, it is assumed that there is an input matrix A, a weight matrix B, and an output matrix C. The operation circuit fetches corresponding data of the matrix B from the weight memory 402, and buffers the data on each PE in the operation circuit. The operation circuit obtains data of the matrix A from the input memory 401, performs a matrix operation on the data and the matrix B, and stores an obtained partial result or final result of the matrix in an accumulator (accumulator) 408.

A vector calculation unit 407 may perform further processing on the output of the operation circuit, for example, vector multiplication, vector addition, exponential operation, logarithmic operation, and value comparison. For example, the vector calculation unit 407 may be configured to perform network calculation, such as pooling (pooling), batch normalization (batch normalization, BN), or local response normalization (local response normalization), at a non-convolutional/non-FC layer in the neural network.

In some implementations, the vector calculation unit 407 can store a processed and output vector in a unified buffer 406. For example, the vector calculation unit 407 may apply a non-linear function to the output of the operation circuit 403, for example, a vector of an accumulated value, to generate an activation value. In some implementations, the vector calculation unit 407 generates a normalized value, a combined value, or both. In some implementations, the processed and output vector can be used as an activation input to the operation circuit 403, for example, for use in subsequent layers in the neural network.

The unified buffer (unified buffer) 406 is configured to store input data and output data.

Weight data is directly by using a direct memory access controller (direct memory access controller, DMAC) 405, input data in an external memory is transferred to the input memory 401 and/or the unified buffer 406, weight data in the external memory is stored in the weight memory 402, and the data in the unified buffer 406 is stored in the external memory.

A bus interface unit (bus interface unit, BIU) 410 is configured to implement interaction between the host CPU, the DMAC, and an instruction fetch buffer 409 by using a bus.

The instruction fetch buffer (instruction fetch buffer) 409 connected to the controller 404 is configured to store an instruction used by the controller 404.

The controller 404 is configured to invoke the instruction buffered in the instruction fetch buffer 409, to control a working process of the operation accelerator.

Generally, the unified buffer 406, the input memory 401, the weight memory 402, and the instruction fetch buffer 409 are all on-chip (On-Chip) memories. The external memory is a memory outside the neural-network processing unit 40. The external memory may be a double data rate synchronous dynamic random access memory (double data rate synchronous dynamic random access memory, DDR SDRAM), a high bandwidth memory (high bandwidth memory, HBM), or another readable and writable memory.

In the neural-network processing unit, the operation circuit 403 is configured to perform a matrix operation, and the vector calculation unit 407 is configured to perform a vector operation, for example, operations of some activation functions or pooling.

However, the vector calculation unit 407 generally can complete only one specific type of vector calculation in each clock cycle. For a neural network with a large vector operation amount and a small matrix operation amount, for example, for a depthwise network and a pointwise network, when the neural-network processing unit 40 is used to perform a calculation process, the vector operation becomes a main factor that restricts calculation efficiency improvement, and affects overall processing efficiency of the network. In addition, for two vector operations that have mutual data dependency, a synchronization instruction usually needs to be added to the vector calculation unit 407, to ensure accuracy of a data read/write sequence. In this way, a pipeline of the vector calculation is interrupted, and processing performance of the vector calculation unit 407 is affected. Some of the foregoing problems may be resolved by optimizing the vector calculation unit 407. However, this increases hardware design complexity and programming complexity. In addition, generally, each time the vector calculation unit 407 performs a vector operation, a read/write operation needs to be performed on the unified buffer 406. When a plurality of vector operations need to be performed on data continuously, this manner causes a large energy efficiency loss.

Embodiments of this application provide a neural network accelerator, to improve a vector operation speed in a neural network model, thereby improving overall processing efficiency of the neural network model.

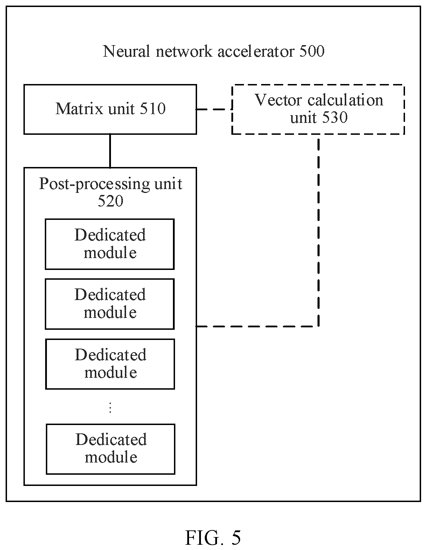

FIG. 5 shows a hardware structure of a neural network accelerator according to an embodiment of this application. The neural network accelerator 500 in FIG. 5 can perform a part of or all operation processes of a neural network model.

The neural network accelerator 500 in this embodiment of this application may be deployed on a cloud service device or a terminal device, for example, a device such as a computer, a server, a vehicle, an unmanned aerial vehicle, or a mobile phone. For example, the neural network accelerator 500 may be deployed on a system on a chip (system on a chip, SoC) in a terminal device such as a mobile phone.

The neural network accelerator 500 may be disposed in the execution device 110 shown in FIG. 1, to complete calculation work of the calculation module 111. The neural network accelerator 500 may alternatively be disposed in the training device 120 shown in FIG. 1, to complete training work of the training device 120 and output the target model/rule 101. An algorithm at each layer in the convolutional neural networks shown in FIG. 2 and FIG. 3 may be implemented in the neural network accelerator 500.

The neural network accelerator 500 includes a matrix unit 510 and a post-processing unit 520.

The matrix unit 510 is configured to perform a matrix operation in the neural network model. The post-processing unit 520 is configured to perform a part of or all vector operations in the neural network model on a result of the matrix operation by using at least one of a plurality of dedicated modules, where one of the dedicated modules is configured to perform n vector operations, and n is a positive integer less than or equal to a first threshold. For example, the first threshold may be 3.

For example, the matrix operation includes a matrix multiplication operation, a convolution operation, or the like.

For example, the matrix unit 510 may be configured to perform a multiplication operation at a fully connected layer, a convolution operation at a convolutional layer, or the like in the neural network model.

For example, the matrix unit 510 may be implemented by using a matrix unit in an existing neural-network processing unit. For example, the matrix unit 510 may perform the matrix operation by using the operation circuit 403 in FIG. 4. A specific structure of the matrix unit 510 is not limited in this embodiment of this application, provided that the matrix unit can perform the matrix operation in the neural network model.

The post-processing unit 520 is configured to perform a vector operation in the neural network model based on the result of the matrix operation.

The post-processing unit 520 includes a plurality of dedicated modules. The plurality of dedicated modules are separately configured to perform different vector operations.

Different from a general-purpose module, a dedicated module is a module configured to implement one or more specific functions.

For example, the vector calculation unit 407 in FIG. 4 may be understood as a general-purpose module, and can complete all vector operations in the neural network model. The dedicated module in this embodiment of this application is configured to complete one or more specific vector operations.

It should be noted that the plurality of dedicated modules are merely logical division. During specific implementation, some of the plurality of dedicated modules may share a same hardware circuit. In other words, a same hardware circuit may perform different vector operations based on different instructions.

The post-processing unit 520 may obtain the result of the matrix operation from a source address (source, src), process the result of the matrix operation, and send processed data to a destination address (destination, dst).

There may be one or more srcs. There can be one or more dsts. Setting manners of src and dst are related to the hardware architecture of the neural network accelerator.

Further, the post-processing unit 520 may further obtain a vector operation parameter from a vector operation parameter address.

Any one of the following may be indicated by an instruction or a parameter of a register in the post-processing unit: dst, src, or a vector operation parameter address.

For example, the matrix unit 510 includes a matrix operation unit and a first memory.

The matrix operation unit may be configured to perform the matrix operation in the neural network model.

The first memory may be configured to store data related to the matrix operation. For example, the first memory may be configured to store at least one of the following: input data of the matrix operation, a parameter of the neural network model, the result of the matrix operation, or the like. The parameter of the neural network model includes a weight parameter of a matrix operation.

It should be noted that the first memory may also include a plurality of memories. The plurality of memories are separately configured to store the input data of the matrix operation, the parameter of the neural network model, the result of the matrix operation, and the like.

For example, the first memory includes an input memory and a result memory.

The input memory is configured to store the input data of the matrix operation and the parameter of the neural network model, and provide an input matrix for the matrix operation unit. For example, the input memory may be a data buffer (data buffer). The input matrix may include a left matrix (left matrix) and a right matrix (right matrix), which respectively correspond to the input data of the matrix operation and a weight parameter of a matrix operation. The result memory is configured to store the result of the matrix operation. For example, the result memory may include a result buffer (result buffer).

For example, the post-processing unit 520 includes a post-processing operation unit and a second memory.

The post-processing operation unit includes the plurality of dedicated modules.

For example, the post-processing operation unit may obtain the result of the matrix operation from the first memory, for example, the result memory in the first memory. In this case, src may include the result memory in the first memory.

The second memory is configured to store data related to a vector operation.

Specifically, the second memory is configured to store a vector operation parameter. The post-processing operation unit may obtain the vector operation parameter from the second memory.

The vector operation parameter is related to a vector operation type. For example, the vector operation parameter includes a bias (bias) operation parameter, a quantization parameter, or the like.

The vector operation parameter is a channel wise (channel wise) parameter, or a channel dimensional parameter. The second memory may store only the vector operation parameter. Because the channel wise parameter occupies small storage space, a capacity requirement for the second memory can be reduced.

Further, the first memory, for example, the input memory in the first memory, is further configured to store a parameter of the neural network. The parameter of the neural network further includes the vector operation parameter. In this case, the second memory may obtain the vector operation parameter from the input memory. In this case, the vector operation parameter address includes the input memory in the first memory.

For example, the post-processing operation unit may input the result of the vector operation into the first memory, for example, input the result into the input memory in the first memory. In other words, the result of the vector operation may be used as the input data of the matrix operation. For example, a result of a vector operation at a current network layer may provide input data for a matrix operation at a next layer. In this case, dst includes the input memory in the first memory.

Further, a data path between the post-processing operation unit and the first memory is a configurable data path. In other words, in an execution process of the neural network, the data path may be enabled or disabled based on a requirement.

For example, the post-processing operation unit may output the result of the vector operation to an external memory. In this case, dst includes the external memory.

Further, a data path between the post-processing operation unit and the external memory is a configurable data path. In other words, in an execution process of the neural network, the data path may be enabled or disabled based on a requirement.

For example, the post-processing operation unit may further obtain, from the first memory, for example, the input memory in the first memory, data required for an element-wise (element-wise, elt-wise) operation.

For example, the neural network accelerator may further include a vector calculation unit 530. The post-processing unit is configured to perform some vector operations in the neural network model on a result of the matrix operation by using at least one of a plurality of dedicated modules; and the vector calculation unit is configured to perform remaining vector operations in the neural network model.

The vector calculation unit is a general-purpose processing module, and can implement various vector operations. When the plurality of dedicated modules in the post-processing unit cannot cover all vector operations in the neural network model, the vector calculation unit may complete a vector operation that cannot be performed by the post-processing unit. In this case, the post-processing operation unit may output the result of the vector operation to the vector calculation unit. In this case, dst includes the vector calculation unit.

Further, a data path between the post-processing operation unit and the vector calculation unit is a configurable data path. In other words, in an execution process of the neural network, the data path may be enabled or disabled based on a requirement.

A communication interface between the post-processing unit and a corresponding module may be set based on the foregoing data transmission relationship, that is, a connection relationship between the post-processing unit and the corresponding module is set.

It should be noted that the foregoing data transmission relationship is merely an example, and another data transmission relationship may be further included in an operation process of the neural network. For example, in the neural network accelerator, the matrix unit may perform a bias operation. In this case, the second memory may provide the bias parameter to the matrix operation unit, that is, a data path exists between the second memory and the matrix operation unit.

It should be further noted that the foregoing connection relationship is merely an example, and the connection relationship in the neural network accelerator may alternatively be set in other forms based on different application scenarios and limitation conditions. For example, the post-processing unit may further include a communication interface between the post-processing unit and another module, or the post-processing unit may not include the foregoing one or more communication interfaces. This is not limited in this embodiment of this application.

For example, no communication interface between the post-processing operation unit and the external memory is disposed in the neural network accelerator, and a result output by the post-processing operation unit is transmitted to an internal memory, for example, the first memory. Alternatively, no communication interface between the post-processing operation unit and the first memory is disposed in the neural network accelerator, and a result output by the post-processing operation unit is transmitted to the external memory.

In another example, no communication interface between the first memory and the post-processing operation unit may be disposed in the neural network accelerator. In this case, if operations in the neural network model include the elt-wise operation, the post-processing operation unit may obtain, by using another data interface, data required for the elt-wise operation.

It should be noted that the accelerator in FIG. 5 is merely an example. In a specific implementation process, a person skilled in the art should understand that the accelerator in FIG. 5 may further include another device required for normal running. In addition, based on a specific requirement, a person skilled in the art should understand that the accelerator in FIG. 5 may further include a hardware device for implementing another additional function. In addition, a person skilled in the art should understand that the accelerator in FIG. 5 may include only devices required for implementing this embodiment of this application, and does not need to include all devices shown in FIG. 5.

Based on the solution in this embodiment of this application, vector operations in the neural network model are completed using one or more dedicated modules. When the neural network model includes steps of a plurality of vector operations, the plurality of vector operations may be completed using the plurality of dedicated modules respectively, thereby increasing a vector operation speed and further improving processing efficiency of the neural network model. In addition, using a vector calculation unit can be avoided as much as possible, thereby reducing a requirement for the vector calculation unit, helping optimize an area of the vector calculation unit, and improving performance and an energy efficiency ratio of the neural network accelerator. Further, decoupling from the vector calculation unit is facilitated. To be specific, no vector calculation unit is disposed in the neural network accelerator, and all vector operations in the neural network model are completed using one or more dedicated modules, thereby further improving performance and an energy efficiency ratio.

In addition, the post-processing unit is decoupled from an existing processor architecture, and is applicable to different neural-network processing unit architectures.

For example, the neural network accelerator may use an architecture of an existing neural-network processing unit. For example, the neural network accelerator may use the architecture shown in FIG. 4, and only a post-processing unit needs to be disposed in the neural-network processing unit shown in FIG. 4.

Optionally, the at least one dedicated module is determined based on a structure of the neural network model.

In other words, the at least one dedicated module is determined based on a network feature or an operation requirement of the neural network model.

In other words, One or more dedicated modules may be selected from the plurality of dedicated modules based on an operation requirement of the neural network model, to perform a corresponding vector operation. For example, a necessary dedicated module (that is, the at least one dedicated module) is enabled in the plurality of dedicated modules based on an operation requirement of the neural network model, or an unnecessary module is bypassed (bypass).

Optionally, the at least one enabled dedicated module is determined based on a structure of the neural network model.

The at least one dedicated module of the plurality of modules is enabled based on a structure of the neural network model to perform a corresponding vector operation.

Further, the post-processing unit may include one or more bypass connection lines. Each of the one or more bypass connection lines is disposed at two ends of one or more dedicated modules, and is configured to bypass the one or more dedicated modules.

For example, a bypass connection line is disposed at two ends of each dedicated module. In this way, an unnecessary dedicated module may be flexibly bypassed based on a requirement.

Optionally, two ends of the plurality of dedicated modules include a bypass connection line, and the enabled bypass connection line is determined based on a structure of the neural network model.

One or more bypass connection lines are enabled based on a structure of the neural network model, to bypass an unnecessary module, so that the at least one dedicated module performs a corresponding vector operation.

Optionally, the at least one dedicated module is indicated by an instruction or a parameter of the register in the post-processing unit.

For example, the enabled bypass connection line may be indicated by an instruction or a parameter of the register in the post-processing unit.

Alternatively, the at least one enabled dedicated module is indicated by an instruction or a parameter of the register in the post-processing unit.

Optionally, the at least one dedicated module is determined based on a structure of the neural network model.

Optionally, the operations performed by the post-processing unit are determined based on a structure of the neural network model.

In other words, the post-processing unit is configured based on a vector operation that needs to be performed in an operation process of the neural network model, so that the post-processing unit performs a corresponding vector operation.

For example, when one of the at least one dedicated module is configured to perform a plurality of operations, the dedicated module may be configured, by using an instruction or a parameter of the register in the post-processing unit, to perform an operation that needs to be performed in the neural network in the plurality of operations.

It should be noted that the neural network model may include a plurality of network layers, and data processing procedures after all the network layers may be the same or different. In actual application, a dedicated module may be configured based on a data processing requirement after each network layer.

In the solution in this embodiment of this application, a dedicated module in the post-processing unit may be configured based on a requirement, to meet different vector operation requirements in a plurality of neural network models, so that the neural network accelerator is applicable to operations of the plurality of neural network models.

In addition, if the vector calculation unit is used to perform a vector operation, when image division is performed in the buffer in advance, both a storage space requirement of the matrix unit and a storage space requirement of the vector calculation unit need to be considered, to meet a storage size limitation condition in the neural network accelerator, and pipeline control needs to be performed on an operation in the vector calculation unit. In this embodiment of this application, the vector operation in the neural network model is completed in an associated manner by enabling an operation supported by the post-processing unit, and only the storage space requirement of the matrix unit needs to be considered when image division is performed in the buffer. In addition, there is no need to perform a pipeline control operation on an operation in the post-processing unit, which helps simplify program implementation.

For example, the plurality of dedicated modules may be parallel modules.

In other words, there may be a specific degree of parallelism between the plurality of dedicated modules, and data input to the dedicated modules can be processed in parallel.

Optionally, the plurality of dedicated modules support a multi-level pipeline processing manner.

When the neural network includes steps of a plurality of vector operations, dedicated modules corresponding to the plurality of vector operations may process data in a multi-level pipeline parallel manner.

For example, the neural network includes a plurality of operations such as quantization, an operation of an activation function, and pooling. In this case, the post-processing unit may obtain some results (for example, a result 1# and a result 2#) of the matrix operation. A dedicated module 1# performs a quantization operation on the result 1#, and writes the result into a register. A dedicated module 2# obtains data from the register and performs an operation of an activation function. When the dedicated module 2# is performing an operation, the dedicated module 1# may perform a quantization operation on the result 2#. In this way, utilization of the dedicated modules can be improved, and performance of the neural network accelerator can be further improved.

When the neural network includes steps of a plurality of vector operations, for example, includes steps such as a quantization operation, an operation of an RELU, and a pooling operation, parallelism between the plurality of steps cannot be implemented by using an existing vector computing unit. The plurality of dedicated modules in this embodiment of this application may enable the plurality of operations to be performed in a pipeline parallel manner, thereby improving performance of the neural network accelerator.

In addition, if the existing vector calculation unit is used to perform steps of a plurality of vector operations, after one step is performed, all the steps need to be written into the buffer. In this embodiment of this application, the plurality of dedicated modules complete the plurality of operations in the multi-level pipeline manner, and there is no need to write a vector operation into a buffer each time the vector operation is performed. This can reduce a quantity of times of read/write for the buffer, reduce power consumption, and help improve an energy efficiency ratio.

The plurality of dedicated modules can support operations of one or more data types, for example, a 16-bit floating point number (floating point 16, FP16), a 32-bit integer number (short int32, S32), or a 16-bit integer number (short int16, S16).

Data types supported by all the plurality of dedicated modules may be the same or different.

Optionally, a data type used by the at least one dedicated module is indicated by an instruction or a parameter of the register in the post-processing unit.

Optionally, the post-processing unit 520 is specifically configured to perform, in a process of moving the result of the matrix operation from a memory of the matrix unit to another memory, a vector operation on the result of the matrix operation by using the at least one dedicated module.

In other words, the post-processing unit 520 may be used as a data path between the memory in the matrix unit and the another memory, to implement associated movement. In other words, in a process of moving data, the post-processing unit 520 performs a vector operation in an associated manner.

"Associated" execution means that a related operation is performed during data movement. Each of the plurality of dedicated modules may support "associated" execution.

For example, the post-processing unit 520 may be configured to complete data movement between the first memory and another memory.

For example, the another memory may be the result memory.

When the post-processing unit can support associated movement, the post-processing unit and the matrix unit can process data in parallel. Particularly, when the plurality of dedicated modules support a multi-level pipeline processing manner, the post-processing unit and the matrix unit basically do not generate additional time overheads in a process of processing data in parallel, thereby further improving performance of the neural network accelerator.

When none of the plurality of dedicated modules in the post-processing unit is enabled, or when all the plurality of dedicated modules are bypassed, the post-processing unit may directly move the result of the matrix operation from the memory of the matrix unit to another memory.

In other words, the post-processing unit can perform a direct memory access (direct memory access, DMA) operation, or the post-processing unit can implement direct data movement.

Optionally, the post-processing unit 520 removes, in the process of moving the result of the matrix operation from the memory of the matrix unit to the another memory, invalid data from the result of the matrix operation in an associated manner.

The deleting invalid data in the result of the matrix operation in the associated manner means deleting invalid data in the result of the matrix operation when the result of the matrix operation is moved from the memory of the matrix unit.

The invalid data may also be referred to as dummy (dummy) data or junk data.

Optionally, the plurality of dedicated modules include at least one of the following: a quantization module or an element-wise (element-wise, elt-wise) operation module.

The quantization module is configured to perform at least one of the following operations on data input to the quantization module: a quantization operation, a dequantization operation, or a weighting operation. The data input to the quantization module is determined based on the result of the matrix operation.

For example, the dequantization operation includes a vector operation of converting data of an integer data type into data of a floating-point data type.

For example, the quantization operation includes a vector operation of converting data of a floating-point data type into data of an integer data type.

For example, the weighting operation includes a vector operation of converting data of an integer data type into data of an integer data type with a smaller quantity of bits (bit), that is, converting data of an integer data type with more bits into data of an integer data type with fewer bits. In other words, the quantity of bits of data obtained after the weighting operation is less than that of data before the weighting operation.

Optionally, the quantization module is configured to perform any one of the following operations: a quantization operation, a dequantization operation, or a weighting operation.

In an implementation, the quantization module supports only one of a quantization operation, a dequantization operation, or a weighting operation. In this case, the quantization module can only be configured to perform an operation supported by the module. A plurality of quantization modules may be disposed in the post-processing unit to separately perform different operations such as a quantization operation, a dequantization operation, or a weighting operation.

In another implementation, the quantization module may support at least two of a quantization operation, a dequantization operation, or a weighting operation. In this case, the quantization module may be configured to perform any operation supported by the module. The quantization module is instructed, by using a program instruction or a parameter of the register, to perform any one of the foregoing operations. In this way, an application scope of the neural network accelerator can be improved, that is, operations of more types of neural network models can be supported.

For ease of description, only an example in which the quantization module supports the quantization operation, the dequantization operation, and the weighting operation is used below for description, and does not constitute a limitation on the solution in this embodiment of this application. In this embodiment of this application, the quantization operation, the dequantization operation, and the weighting operation are collectively referred to as operations of a quantization type.

The element-wise operation module is configured to perform an element-wise operation on data input to the element-wise operation module, where the data input to the element-wise operation module is determined based on the result of the matrix operation.

The element-wise operation is an operation between two tensors. Specifically, the element-wise operation is an operation between corresponding elements in two tensors. The corresponding elements in the two tensors are elements at identical locations in the two tensors.

An arithmetic operation between two tensors may be considered as an element-wise operation, for example, an addition operation, a subtraction operation, or a multiplication operation.

For example, an element-wise addition operation and an element-wise subtraction operation may be used in a neural network having a residual connection or used in an adder neural network.

An element-wise operation may be understood as performing an arithmetic operation on corresponding elements one by one in two feature graphs whose shapes (shape) are the same.

Input data of the element-wise operation module may come from a same address, or may come from different addresses.

The element-wise operation module can support element-wise operations of one or more data types. For example, the element-wise operation module can support a 16-bit floating point number (floating point 16, FP 16) and a 16-bit integer number (short int16, S16). In an actual operation process, a data type used by the element-wise operation module may be determined based on a data type input to the element-wise operation module, for example, determined based on a data type of a result of a matrix operation.

In the solution in this embodiment of this application, the plurality of dedicated modules include an element-wise operation module or a quantization module, and can support operations of more types of neural network models, thereby improving flexibility of the neural network accelerator.

Optionally, the plurality of dedicated modules further include at least one of the following: a bias (bias) operation module, an activation function module, or a pooling (pooling) module.

The bias operation module is configured to perform a bias operation on data input to the bias operation module, where the data input to the bias operation module is determined based on the result of the matrix operation.

For example, the bias operation module can support a bias addition operation of one or more data types. For example, the data type includes integer data or floating-point data. In an operation process of the neural network model, if the bias operation module can support a plurality of data types, a data type of the bias operation module may be configured based on an operation requirement of the neural network model. For example, the data type of the bias operation module is configured based on a data type of a result of a matrix operation.

The activation function module is configured to process, according to an activation function, data input to the activation function module, where the data input to the activation function module is determined based on the result of the matrix operation.

For example, the activation function includes a sigmoid function, a tanh function, an RELU-type activation function, or the like.

The RELU-type activation function includes a rectified linear unit (rectified linear unit, RELU), a leaky rectified linear unit (Leaky-RELU), a parametric rectified linear unit (parametric rectified linear unit, PRELU), or the like.

The activation function module is configured to perform any one of the following operations: an operation of an RELU, an operation of a PRELU, or an operation of a Leaky-RELU.

In an implementation, the activation function module supports only an operation of an RELU, an operation of a PRELU, or an operation of a Leaky-RELU. In this case, the activation function module can only be configured to perform an operation supported by the module. A plurality of activation function modules may be disposed in the post-processing unit to separately perform operations of different types of activation functions.

In another implementation, the activation function module may support at least two of an operation of an RELU, an operation of a PRELU, or an operation of a Leaky-RELU. In this case, the activation function module may be configured to perform any operation supported by the module. For example, the activation function module is instructed, by using a program instruction or a parameter of the register, to perform any one of the foregoing operations. A specific operation may be configured based on an operation required in the neural network model. In this way, an application scope of the neural network accelerator can be improved, that is, operations of more types of neural network models can be supported.

Optionally, the activation function module is configured to perform an operation of an activation function or an operation of a lookup table.

In other words, the activation function module may replace an operation circuit such as a multiplication circuit of an activation function in a manner of lookup table (lookup table, LUT), to implement calculation of more types of nonlinear activation functions.

The pooling module is configured to perform pooling processing on data input to the pooling module, where the data input to the pooling module is determined based on the result of the matrix operation.

For example, the pooling module may be configured to perform at least one of the following operations: a max pooling (max pooling) operation or an average pooling (average pooling) operation.

Optionally, the pooling module is configured to perform any one of the following operations: a max pooling operation or an average pooling operation.

In an implementation, the pooling module supports only a max pooling operation or an average pooling operation. In this case, the pooling module can only be configured to perform an operation supported by the module. A plurality of pooling modules may be disposed in the post-processing unit to separately perform different types of pooling operations.

In another implementation, the pooling module may support a max pooling operation and an average pooling operation. In this case, the pooling module may be configured to perform any operation supported by the module. For example, the pooling module is instructed, by using a program instruction or a parameter of the register, to perform any one of the foregoing operations. A specific operation may be configured based on an operation required in the neural network model. In this way, an application scope of the neural network accelerator can be improved, that is, operations of more types of neural network models can be supported.

Optionally, the post-processing unit may control a bit width of read data by using a mode control bit (mode control bit, MCB). In this way, a requirement for a read bandwidth can be reduced.

For example, if the post-processing unit reads the result of the matrix operation from the first memory, the post-processing unit may control, by using the MCB, a bit width of the read result of the matrix operation, to reduce a requirement for a read bit width of the first memory.

Optionally, the quantization module includes a first quantization module and a second quantization module, and the activation function module includes a first activation function module and a second activation function module. The plurality of dedicated modules in the post-processing unit 520 are connected in the following sequence: the bias operation module, the first quantization module, the first activation function module, the pooling module, the element-wise operation module, the second activation function module, and the second quantization module.

The connection sequence of the dedicated modules in this embodiment of this application is obtained by analyzing a typical neural network model. In this embodiment of this application, a connection sequence of the dedicated modules and a connection sequence obtained by bypassing or enabling some dedicated modules can support most post-processing procedures, and cover most neural network requirements. Using a vector calculation unit is avoided as much as possible, thereby helping optimize an area of the vector calculation unit, and improving performance and an energy efficiency ratio of the neural network accelerator. Further, decoupling from the vector calculation unit is facilitated. To be specific, no vector calculation unit is disposed in the neural network accelerator, and all vector operations in the neural network model are completed using one or more dedicated modules, thereby further improving performance and an energy efficiency ratio.

The first quantization module and the second quantization module may be implemented by using different hardware circuits. The first activation function module and the second activation function module may be implemented by using different hardware circuits.

As described above, different dedicated modules may share a hardware module. Sharing a hardware module can reduce a requirement for operators, reduce costs, and reduce power consumption.

In an implementation, a same hardware module may implement a corresponding function in an alternative form. In another implementation, a same hardware module may implement a plurality of functions simultaneously.

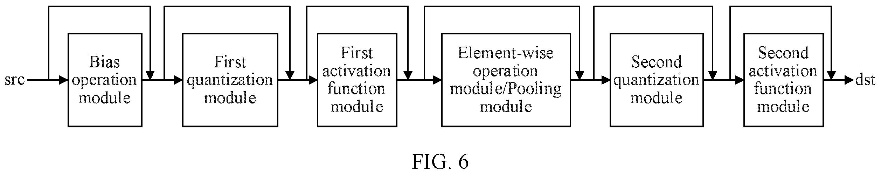

FIG. 6 is a schematic flowchart of a processing process of a post-processing unit. For example, as shown in FIG. 6, a pooling module and an element-wise operation module may share a hardware circuit. The hardware circuit may be configured to perform pooling processing or perform an elt-wise operation, that is, implement a corresponding function in an alternative form.

Correspondingly, the plurality of dedicated modules in the post-processing unit 520 may alternatively be understood as being connected in the following sequence: the bias operation module, the first quantization module, the first activation function module, the pooling module, the second activation function module, and the second quantization module.

Alternatively, the plurality of dedicated modules in the post-processing unit 520 may be understood as being connected in the following sequence: the bias operation module, the first quantization module, the first activation function module, the element-wise operation module, the second activation function module, and the second quantization module.

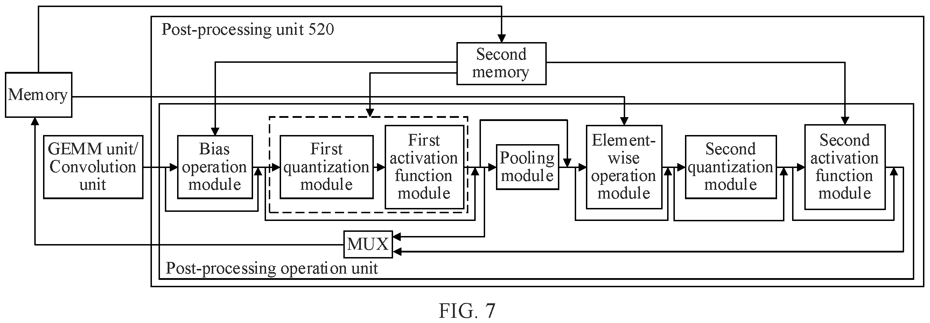

FIG. 7 is a schematic flowchart of a processing process of another post-processing unit.

If an activation function used by an activation function module is an RELU-type activation function, a quantization module and the activation function module may share a hardware module, or may not share a hardware module. For example, an activation function used by a first activation function module is an RELU-type activation function. An activation function used by a second activation function module is an RELU-type activation function. A first quantization module and the first activation function module may share a hardware module, or may not share a hardware module. A second quantization module and the second activation function module may share a hardware module, or may not share a hardware module.

The following uses an example in which the first quantization module and the first activation function module share a hardware module for description.

The hardware module may be configured to perform an operation of a quantization type.

Alternatively, the hardware module may be configured to perform an operation of an RELU-type activation function.

Alternatively, the hardware module may be configured to perform an operation of a quantization type and an operation of an RELU-type activation function. Specifically, a parameter of the operation of the quantization type and a parameter of the RELU-type activation function may be combined, or the operation of the quantization type and the operation of the RELU-type activation function may be combined. The hardware module may perform the operation of the quantization type and the operation of the RELU-type activation function based on a combined parameter. For a specific implementation, refer to the following description. Details are not described herein again.

In this embodiment of this application, a multiplication operation used in the RELU-type activation function and a multiplication operation in an operation of a quantization type are combined and merged into one multiplication operation by using parameters, so that the activation function module and the quantization module can share a hardware module, thereby reducing a requirement for operators, reducing costs, and reducing power consumption.

Further, as described above, an unnecessary module may be bypassed by using a bypass connection line.

A bypass connection line is disposed at two ends of each dedicated module shown in FIG. 6 and FIG. 7. In this way, any dedicated module in FIG. 6 and FIG. 7 may be bypassed. Specifically, an unnecessary dedicated module may be bypassed based on an operation requirement configuration of the neural network model, to implement an operation of the neural network model, to complete a plurality of vector operations in a multi-level pipeline parallel manner.

For example, FIG. 7 is used as an example. Post-processing operations after a convolutional layer include a bias operation, a dequantization operation, and an operation of an RELU. In this case, a pooling module, an element-wise operation module, the second activation function module, and the second quantization module in FIG. 7 may be bypassed. Further, the first quantization module is configured to perform a dequantization operation, and the activation function module is configured to perform an operation of an RELU.

It should be understood that a manner of setting a bypass connection line in FIG. 6 and FIG. 7 is merely an example. For example, a bypass connection line may be further disposed at two ends of a plurality of modules, that is, when the bypass connection line is enabled, the plurality of modules are bypassed. In another example, a bypass connection line may be further disposed at two ends of some of the plurality of dedicated modules.

Optionally, the post-processing unit is further configured to perform a data format conversion operation.

In some implementations, a data format conversion operation may also be referred to as a data rearrangement operation.

Specifically, a plurality of elements in the result of the matrix operation are arranged based on a first location relationship, and the post-processing unit is further configured to arrange the plurality of elements based on a second location relationship, to obtain a target result.

A location relationship between elements may be indicated by storage addresses of the elements.

The data format conversion operation includes an operation of converting depth data of a feature in a result of a matrix operation into space data.

Optionally, a quantity of channels for the result of the matrix operation is greater than a quantity of channels for the target result, a height of the result of the matrix operation is less than a height of the target result, and a width of the result of the matrix operation is less than a width of the target result.

In other words, the post-processing unit may implement a conversion operation from depth data of a feature to space data (depth to space, depth2space).

Alternatively, it may be understood that a plurality of pieces of channel wise data in the feature map are stored in a location of one piece of channel width and height wise data.

Optionally, the result of the matrix operation is an output result of a convolution operation obtained according to a Winograd algorithm, and the target result is an output result of the convolution operation.

In an operation process of the neural network model, a data format conversion operation may need to be performed. For example, a storage format of a result of a matrix operation may not meet a storage format of input data of a next matrix operation. In this case, a data format conversion operation needs to be performed, to meet the storage format of the input data of the next matrix operation.

For example, the matrix operation is a convolution operation. An output result of the convolution operation may be directly obtained through calculation, that is, the convolution operation is performed on two input matrices to obtain the output result. In this case, a storage format of the output result can generally meet the storage format of the input data of the next matrix operation. Alternatively, an output result of the convolution operation may be obtained according to a Winograd algorithm. For ease of differentiation, the result obtained according to the Winograd algorithm is referred to as an output result of Winograd convolution. Although the output result of the Winograd convolution is consistent with the output result of the convolution operation, the output results obtained by the two are stored in different data formats. In other words, elements in output result matrices obtained by the two are stored based on different location relationships. Generally, the output result of the Winograd convolution cannot meet a storage format of input data of a next matrix operation. The post-processing unit may convert a data format of the output result of the Winograd convolution into a data format of the output result of the convolution operation.

For example, the post-processing unit may arrange elements in an output matrix of the Winograd convolution based on storage addresses of corresponding elements in an output matrix of the convolution operation. The storage addresses of the elements in the output matrix of the convolution operation indicate the second location relationship. In other words, the elements in the output matrix of the Winograd convolution are written into destination addresses of the corresponding elements in the output matrix of the convolution operation. The destination addresses of the corresponding elements in the output matrix of the convolution operation indicate the second location relationship.

In other words, the post-processing unit may be configured to implement a data rearrangement operation of the output result of the Winograd convolution in collaboration with the Winograd algorithm.

Optionally, the post-processing unit may be further configured to perform a bit width conversion operation on floating-point data.

In other words, the post-processing unit may be further configured to perform a precision conversion operation on floating-point data.

For example, the bit width conversion operation of the floating-point data may be performed by the quantization module, or the bit width conversion operation of the floating-point data may be performed by another dedicated module. In other words, the bit width conversion operation of the floating-point data may share a hardware module with another operation, or the bit width conversion operation of the floating-point data may be performed by a separate hardware module.

For example, the post-processing unit performs, in the process of moving the result of the matrix operation from the memory of the matrix unit to the another memory, the bit width conversion operation of the floating-point data in an associated manner.

If the inference operation of the neural network model includes a batch normalization (batch normalization) operation, the batch normalization operation may be integrated into a bias (bias) and a weight (weight), that is, the batch normalization operation is completed by performing a matrix operation and a bias addition operation. In this way, there is no need to provide an operation circuit separately to support the operation, thereby reducing hardware costs.

To better describe the solution in this embodiment of this application, the following provides an example with reference to FIG. 7.

The post-processing unit in FIG. 7 includes a second memory and a plurality of dedicated modules.

The second memory is configured to store a vector operation parameter, for example, a bias parameter or a quantization parameter, and provide the vector operation parameter to a dedicated module. The plurality of dedicated modules are connected in the following sequence: the bias operation module, the first quantization module, the first activation function module, the pooling module, the element-wise operation module, the second activation function module, and the second quantization module.

For specific descriptions of the second memory and the dedicated modules, refer to related descriptions in FIG. 5. Details are not described herein again.

In FIG. 7, the vector operation parameter address includes a memory (memory), and src includes a matrix unit. In FIG. 7, only one memory is used as an example. In actual application, there may be one or more memories. The matrix unit includes a convolution unit or a general matrix multiplication (general matrix multiplication, GEMM) unit. The post-processing unit in FIG. 7 obtains a vector operation parameter from the memory, and obtains a result of the matrix operation from the matrix unit. For example, the memory in FIG. 7 may include an input memory in a first memory, and the matrix unit may include a result memory in the first memory. It should be noted that the GEMM or convolution unit in FIG. 7 merely indicates that the input data of the post-processing unit includes an operation result of the matrix unit. In an actual operation process, the post-processing unit may not directly obtain the result of the matrix operation from the matrix unit. For example, the post-processing unit may alternatively obtain the result of the matrix operation from another memory.

In FIG. 7, dst includes a memory. There may be one or more memories. In other words, the output data of the post-processing unit may be sent to one destination address, or may be sent to a plurality of destination addresses. For example, using the neural network accelerator in FIG. 5 as an example, dst may include a first memory. In this way, data processed by the post-processing unit may be used as input data of a next matrix operation. In another example, dst may further include a memory outside the neural network accelerator. In another example, dst may further include a vector calculation unit. In this case, the data processed by the post-processing unit may be further processed by the vector calculation unit.

src, dst, or a vector operation parameter address in FIG. 7 may be indicated by a hardware instruction, or may be indicated by a preconfigured register parameter.

Each of the plurality of dedicated modules in FIG. 7 may include one or more hardware operation circuits, and is configured to complete a vector operation required by the neural network model. For example, the hardware operation circuit includes a multiplication (multiplication, MUL) circuit, an add (add) circuit, a max (max) circuit, or the like. The hardware operation circuit can support one or more data types, for example, S32, S16, or FP16.

A bypass connection line may be disposed at two ends of each dedicated module in the post-processing unit shown in FIG. 7. In an operation process of the neural network model, a corresponding bypass connection line may be enabled based on a requirement, to bypass a corresponding module. In this way, any one of the plurality of dedicated modules may be bypassed based on an operation requirement of the neural network model.

Whether each dedicated module in FIG. 7 is bypassed may be indicated by an instruction. Alternatively, whether each dedicated module is bypassed may be indicated by a preconfigured register parameter.

For example, the post-processing unit 520 may be configured to perform, in a process of moving the result of the matrix operation from a memory of the matrix unit to another memory, a vector operation on the result of the matrix operation by using the at least one dedicated module.

Further, the post-processing unit 520 may remove, in the process of moving the result of the matrix operation from the memory of the matrix unit to the another memory, invalid data from the result of the matrix operation in an associated manner.

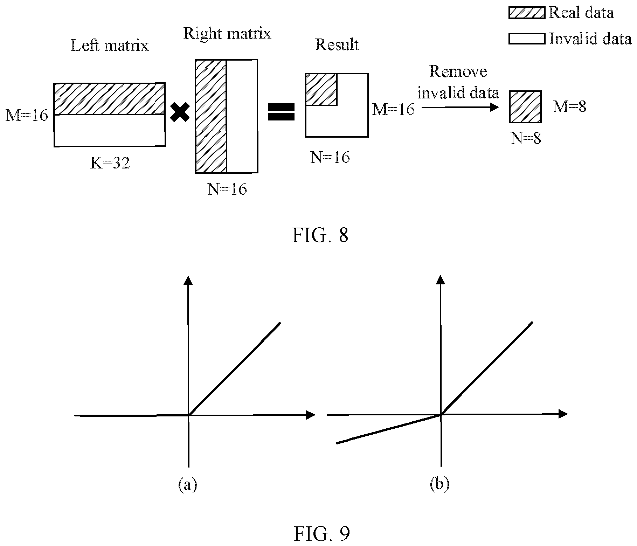

A memory configured to store the result of the matrix operation, for example, the memory of the matrix unit, may store the result in a unit of a fixed block size. For example, data stored in the result memory in the first memory may be stored in a unit of a fixed block size. However, a parameter of each layer in the neural network model and input data of each layer do not necessarily meet a requirement of a fixed block size. As shown in FIG. 8, data is stored in the result memory based on a block size of 16*16. A real left matrix is an 8*32 matrix, that is, M=8 and K=32, and a left matrix that is input to a matrix unit and on which a matrix operation is performed is a 16*32 matrix, that is, M=16 and K=32. Data outside the real left matrix and inside the input left matrix is invalid data. A real right matrix is a 32*8 matrix, that is, K=32 and N=8, and a right matrix that is input to a matrix unit and on which a matrix operation is performed is a 32*16 matrix, that is, K=32 and N=16. Data outside the real right matrix and inside the input right matrix is invalid data. A result obtained after matrix multiplication is performed on the input left matrix and the input right matrix is a 16* 16 matrix, and is stored in the result memory. A real matrix operation result obtained by multiplying the real left matrix by the real right matrix is an 8*8 matrix. As shown in FIG. 8, data in the result memory other than the real matrix operation result is invalid data. The real left matrix and the real right matrix are a left matrix and a right matrix required for an operation at a network layer of the neural network model. A matrix operation result stored in the result memory is a 16* 16 matrix, and the result in the result memory is greater than the real matrix operation result. After invalid data in two dimensions of the matrix operation result is removed (remove), a real calculation result, that is, an 8*8 matrix, may be obtained.

It should be understood that the operation of removing invalid data is an optional operation. In an implementation, the post-processing unit supports removal of invalid data in an associated manner. In this case, whether to enable the function may be configured based on a requirement. In another implementation, the post-processing unit may support removal of invalid data in an associated manner, or does not support removal of invalid data in an associated manner, that is, whether to enable the function cannot be configured based on a requirement. If input data of each module in the post-processing unit is a result of a matrix operation, the result of the matrix operation may be a result of deleting invalid data, or may be a result of not deleting invalid data. To avoid repetition, whether to delete invalid data is not distinguished in the following description when another module processes a result of a matrix operation.

The bias operation module is configured to perform a bias addition operation. Specifically, the bias operation module is configured to perform a bias addition operation on data input to the bias operation module. Based on the connection sequence shown in FIG. 7, the data input to the bias operation module may be a result of a matrix operation.

For example, the bias operation module may include an add circuit. The bias operation module completes a bias addition operation by using the add circuit.

For example, the bias operation module may support an operation on data of a type such as FP16, S16, or S32.

Further, the bias operation module can support a bias addition operation of one or more data types. For example, the data type includes integer data or floating-point data. In an operation process of the neural network model, if the bias operation module can support a plurality of data types, a data type of the bias operation module may be configured based on an operation requirement of the neural network model. For example, the data type of the bias operation module is configured based on a data type of a result of a matrix operation.

A bias addition operation is a common data processing manner after a convolution operation, and a calculation principle of the convolution operation and the bias addition operation meets the following formula:

$$C = A \otimes B + Bias$$

A represents an input feature map (feature map) whose dimension is [$N$, $H_{in}$, $W_{in}$, $C_{in}$], that is, a feature map input to a convolutional layer, N represents a quantity of input feature maps, $H_{in}$ represents a height of the input feature map, $W_{in}$ represents a width of the input feature map, and $C_{in}$ represents a quantity of channels of the input feature map. B represents a weight (weight) matrix whose dimension is [$C_{out}$, $k\_h,k\_w$, $C_{in}$], that is, a parameter matrix of a convolution kernel, $C_{out}$ represents a quantity of convolution kernels, or represents a quantity of channels of an output feature map, $k\_h$ represents a height of the convolution kernel, and $k\_w$ represents a width of the convolution kernel. *Bias* represents bias data whose dimension is [$C_{out}$], C represents an output feature map whose dimension is [$N$, $H_{out}$, $W_{out}$, $C_{out}$], $H_{out}$ represents a height of the output feature map, $W_{out}$ represents a width of the output feature map, and C is the feature map output by the bias operation module.

The second memory obtains the bias parameter, and provides the bias parameter to the bias operation module. After the matrix unit completes the matrix operation of $A \otimes B$, the bias operation module performs a bias addition operation on a result of the matrix operation.

Further, the post-processing unit may perform a bias addition operation on the result of the matrix operation in an associated manner by using the bias operation module while moving the result of the matrix operation.

It should be understood that the associated execution is described herein only by using the bias operation module as an example, and another dedicated module may also support the associated execution of a corresponding operation. For brevity of description, details are not described below.

A bypass connection line is disposed at two ends of the bias operation module shown in FIG. 7, and is configured to bypass the bias operation module. Specifically, the bypass connection line is configured to bypass the bias operation module based on an operation requirement of the neural network model. For example, in an operation process of the neural network model, if a bias addition operation does not need to be performed after a matrix operation is performed at a network layer, the bypass connection line may be enabled to bypass the bias operation module after the matrix operation is performed at the network layer, and a subsequent operation is performed on a result of the matrix operation.

It should be understood that the bypass operation is described herein only by using the bias operation module as an example, and a bypass operation of another dedicated module is consistent with the bypass operation of the bias operation module. For brevity of description, details are not described below.

Further, the post-processing unit may control a bit width of read data by using an MCB.

In an implementation, the quantization module is configured to perform any one of the following operations: a quantization operation, a dequantization operation, or a weighting operation.

For example, the quantization module can perform only one of the operations, for example, the dequantization operation. In this case, a plurality of quantization modules may be disposed in the post-processing unit to separately perform different operations such as a quantization operation, a dequantization operation, or a weighting operation.

In another implementation, in an operation process of the neural network model, the quantization module may be configured to perform any one of the following operations: a quantization operation, a dequantization operation, or a weighting operation. For example, the quantization module is instructed, by using a program instruction, to perform any one of the foregoing operations. A specific operation may be configured based on an operation required in the neural network model.

For example, the quantization module can perform a quantization operation, a dequantization operation, and a weighting operation. In an actual running process, the quantization module may be configured to perform any one of the foregoing operations based on a requirement to implement a corresponding function. For ease of description, only this implementation is used as an example below to describe the solution in this embodiment of this application, and does not constitute a limitation on the solution in this embodiment of this application.

A dequantization operation may be involved in an operation process of the neural network. For example, in an inference phase of the neural network model, floating point number matrix multiplication may be replaced with fixed-point number matrix multiplication, to improve an energy efficiency ratio. However, in a vector operation after the matrix operation, due to a precision requirement, some vector operations still need to be calculated by using a floating point number. A matrix calculation result can be converted from a fixed-point number to a floating point number by performing the dequantization operation.

The dequantization operation includes a vector operation of converting data of an integer data type into data of a floating-point data type.

For example, the first quantization module in FIG. 7 may be configured to perform a dequantization operation.

As shown in FIG. 7, if the first activation function module uses an RELU-type activation function, the first activation function module includes a multiplication circuit, and the first quantization module includes a multiplication circuit. Further, the first quantization module may further include an add circuit. Each of the first activation function module and the first quantization module includes a multiplication circuit.

Specifically, the RELU-type activation function includes an RELU, a Leaky-RELU, a PRELU, or the like.

A schematic diagram of the RELU is shown in (a) of FIG. 9, and meets the following calculation formula:

$$RELU(y_{hwc}) = \begin{cases} x_{hwc}, x \geq 0 \\ 0, x < 0 \end{cases}$$

A schematic diagram of the Leaky-RELU is shown in (b) of FIG. 9, and meets the following calculation formula:

$$LeakyRELU(y_{hwc}) = \begin{cases} x_{hwc}, x \geq 0 \\ a * x_{hxc}, x < 0, a \geq 0 \end{cases}$$

A schematic diagram of the PRELU is shown in (b) of FIG. 9, and meets the following calculation formula:

$$PRELU(y_{hwc}) = \begin{cases} x_{hwc}, x \geq 0 \\ a_c * x_{hxc}, x < 0, a_c \geq 0 \end{cases}$$

$RELU(y_{hwc})$ represents a result obtained after processing through the RELU, $x_{hwc}$ represents data input to the activation function, $LeakyRELU(y_{hwc})$ represents a result obtained after processing through the Leaky-RELU, a represents a Leaky-RELU coefficient, $PRELU(y_{hwc})$ represents a result obtained after processing through the PRELU, and $a_c$ represents a PRELU coefficient.

The first activation function module and the first quantization module may share a hardware module by merging an operation of the RELU-type activation function with a dequantization operation.

Specifically, two multiplication operations, namely, a multiplication operation used for the dequantization operation and a multiplication operation used for the operation of the RELU-type activation function, may be merged into one multiplication operation by using parameters. In this way, the first activation function module and the first quantization module share a hardware module.

For example, in a scenario in which only a dequantization operation needs to be performed, the shared hardware module may be configured to perform the dequantization operation. Alternatively, in a scenario in which only an operation of the RELU-type activation function needs to be performed, the shared hardware module may be configured to perform the operation of the RELU-type activation function.

Alternatively, in a scenario in which a dequantization operation and an operation of the RELU-type activation function need to be performed, the hardware module may be configured to perform the dequantization operation and the operation of the RELU-type activation function.

In this embodiment of this application, a multiplication operation used in the RELU-type activation function and a multiplication operation in a dequantization operation are combined and merged into one multiplication operation by using parameters, so that the activation function module and the quantization module can share a hardware module, thereby reducing a requirement for operators, reducing costs, and reducing power consumption.

Using a convolutional neural network model as an example, a process of sequentially performing operations of convolution (convolution), batch normalization, Scale (Scale), and the RELU-type activation function is a common operation procedure. Parameters of the operations of batch normalization and Scale may be integrated into a bias (bias) and a weight (weight), that is, the batch normalization and Scale operations are completed by performing a matrix operation and a bias addition operation in convolution. In this way, no additional operation circuit needs to be provided.

In the inference process, the dequantization operation and the operation of the RELU-type activation function may share a hardware module, to reduce a requirement for an operator.

The following describes a process of performing a dequantization operation or an operation of an activation function in a scenario in which the quantization module and the activation function module share a hardware module.

S11: Obtain input data.

The input data refers to data that is input to the shared hardware module.

For example, the input data is obtained from the first memory, that is, the input data is obtained based on the result of the matrix operation. For example, the result of the matrix operation is used as the input data.

For example, in the post-processing unit shown in FIG. 7, the bias operation module is bypassed, and the input data is obtained from the first memory.

Alternatively, the input data is obtained based on an output result of the bias operation module.

For example, in the post-processing unit shown in FIG. 7, an output result obtained after processing through the bias operation modulo is used as the input data.

For example, a shift operation is performed based on an MCB control bit, and high-order data is read as the input data. In an operation process of the model, whether to configure the MCB may be selected through a program.

A manner of obtaining the input data may be determined based on a structure of the neural network model. This is not limited in this embodiment of this application.

Input data of each module in this embodiment of this application may be determined based on a structure of the neural network model. For example, refer to the foregoing manner for setting. To avoid repetition, details are not described below.

S12: Convert the input data into high-precision intermediate data, where the intermediate data is data of a floating point type.

"High precision" and "low precision" in embodiments of this application are relative. Precision of the input data only needs to be lower than that of the intermediate data. For example, the high-precision intermediate data may be intermediate data of an FP32 type.

S13: When the intermediate data is greater than 0, multiply the intermediate data by a quantization coefficient M1 of a dequantization operation. M1 may be stored in the second memory.

When the intermediate data is less than or equal to 0, a multiplication operation parameter is configured for the intermediate data based on a structure of the neural network model.

Specifically, in a post-processing procedure of the current matrix operation, if an operation of an activation function is not involved after the dequantization operation, the intermediate data is multiplied by M1. The multiplication operation parameter is M1. In other words, the operation of the activation function is disabled. Alternatively, it may be understood that the shared hardware module is configured to perform a dequantization operation.

In a post-processing procedure of the current matrix operation, if an operation of an RELU is involved after the dequantization operation, the intermediate data is multiplied by 0. The multiplication operation parameter is 0.

In a post-processing procedure of the current matrix operation, if an operation of a Leaky-RELU is involved after the dequantization operation, the intermediate data is multiplied by a first coefficient M2, where M2 is a product of the quantization coefficient M1 and the Leaky-RELU coefficient. M2 may be stored in the second memory in FIG. 7.

In a post-processing procedure of the current matrix operation, if an operation of a PRELU is involved after the dequantization operation, the intermediate data is multiplied by a second coefficient M3, where M3 is a product of the quantization coefficient M1 and the PRELU coefficient. M3 may be stored in the second memory in FIG. 7.

Further, the data processing procedure further includes step S14.

S14: Convert a data type of the data obtained in step S13 into a data type required for a subsequent operation.

For example, the data type required for the subsequent operation may be a low-precision data type.

In other words, the data obtained in step S13 may be considered as data of a high-precision floating-point data type, the high-precision floating-point data type is converted into a low-precision floating-point data type in step S14, and then data of the low-precision floating-point data type can be transmitted to the subsequent operation.

For example, whether to perform step S14 is determined based on the data type required for the subsequent operation. In other words, if an operation after the shared hardware module requires the low-precision data type, step S14 is performed. If the operation after the shared hardware module does not require the low-precision data type, step S14 does not need to be performed.

A quantization operation may be involved in the operation process of the neural network. For example, in an inference phase of the neural network model, floating point number matrix multiplication may be replaced with fixed-point number matrix multiplication in a matrix operation process, to improve an energy efficiency ratio. Due to a precision requirement, some operations need to be calculated by using a floating point number, to obtain floating-point data. For example, a result of a floating-point matrix multiplication operation, a pooling operation, or an ele-wise operation is floating-point data. Fixed-point data obtained by quantizing the floating-point data may be used as input data of a matrix operation at a next layer, for example, input data of a convolution operation.

The quantization operation includes a vector operation of converting data of a floating-point data type into data of an integer data type.

For example, the second quantization module in FIG. 7 may be configured to perform a quantization operation.

As shown in FIG. 7, if the second activation function module uses an RELU-type activation function, the second activation function module includes a multiplication circuit, and the second quantization module includes a multiplication circuit. Each of the second activation function module and the second quantization module includes a multiplication circuit.

The second activation function module and the second quantization module may share a hardware module by merging an operation of the RELU-type activation function with a quantization operation.

Specifically, two multiplication operations, namely, a multiplication operation used for the quantization operation and a multiplication operation used for the operation of the RELU-type activation function, may be merged into one multiplication operation by using parameters. In this way, the second activation function module and the second quantization module share a hardware module.

For example, in a scenario in which only a quantization operation needs to be performed, the shared hardware module may be configured to perform the quantization operation. Alternatively, in a scenario in which only an operation of the RELU-type activation function needs to be performed, the shared hardware module may be configured to perform the operation of the RELU-type activation function.

Alternatively, in a scenario in which a quantization operation and an operation of the RELU-type activation function need to be performed, the hardware module may be configured to perform the quantization operation and the operation of the RELU-type activation function.

In this embodiment of this application, a multiplication operation used in the RELU-type activation function and a multiplication operation in a quantization operation are combined and merged into one multiplication operation by using parameters, so that the activation function module and the quantization module can share a hardware module, thereby reducing a requirement for operators, reducing costs, and reducing power consumption.

The following describes a process of performing a quantization operation or an operation of an activation function in a scenario in which the quantization module and the activation function module share a hardware module.

S21: Obtain input data.

The input data refers to data that is input to the shared hardware module.

For example, a hardware module shared by the second quantization module and the second activation function module in FIG. 7 is enabled. The input data may come from any module before the hardware module.

For detailed description of the obtaining manner, refer to step S11. Details are not described herein again.

S22: Convert the input data into high-precision intermediate data, where the intermediate data is data of a floating point type.

Step S22 is an optional step. For example, if the input data is high-precision floating-point data, step S22 does not need to be performed.

S23: When the intermediate data is greater than 0, multiply the intermediate data by a quantization coefficient M4 of a quantization operation. M4 may be stored in the second memory in FIG. 7.

When the intermediate data is less than or equal to 0, a multiplication operation parameter is configured for the intermediate data based on a structure of the neural network model.

Specifically, if an operation of an activation function is not involved before or after the quantization operation, the intermediate data is multiplied by M4. The multiplication operation parameter is M4. In other words, the operation of the activation function is disabled. Alternatively, it may be understood that the shared hardware module is configured to perform only a quantization operation.

If an operation of an RELU is involved before or after the quantization operation, the intermediate data is multiplied by 0. The multiplication operation parameter is 0.

If an operation of a Leaky-RELU is involved before or after the quantization operation, the intermediate data is multiplied by a third coefficient M5, where M5 is a product of the quantization coefficient M4 and the Leaky-RELU coefficient. M5 may be stored in the second memory in FIG. 7.

If an operation of a PRELU is involved before or after the quantization operation, the intermediate data is multiplied by a fourth coefficient M5, where M5 is a product of the quantization coefficient M4 and the PRELU coefficient. M6 may be stored in the second memory in FIG. 7.

S24: Convert a data type of the data obtained in step S23 into an integer data type.

S25: Add the data obtained in step S24 to an integer offset (offset).

Further, the data processing procedure further includes step S26.

S26: Convert a data type of the data obtained in step S25 into a data type required for a subsequent operation.

For example, whether to perform step S26 is determined based on the data type required for the subsequent operation. If the data type of the data obtained in step S25 meets a requirement of the subsequent operation, step S26 does not need to be performed.

For a specific implementation of step S21 to step S26, refer to the foregoing specific calculation procedure of the dequantization operation and the operation of the RELU-type activation function.

A weighting operation may be involved in the operation process of the neural network module. For example, in the inference phase of the neural network model, when a plurality of consecutive convolution operations do not include a vector operation or include only an operation of an RELU-type activation function, when precision permits, the plurality of consecutive convolution operations may be calculated by using a full fixed-point data type. Because a bit width of fixed-point data used for an accumulation operation of a matrix is greater than a bit width of data input by the matrix, before a result of one matrix operation is used as input data of a next layer, a bit width of integer data needs to be reduced by performing a weighting operation, that is, a more-bit-width integer data type is converted into a less-bit-width integer data type.

The weighting operation includes a vector operation of converting data of an integer data type into data of an integer data type with a smaller quantity of bits (bit), that is, converting data of an integer data type with more bits into data of an integer data type with fewer bits. In other words, the quantity of bits of data obtained after the weighting operation is less than that of data before the weighting operation.

For example, the first quantization module or the second quantization module in FIG. 7 may be configured to perform the weighting operation.

The following uses an example in which the first quantization module performs the weighting operation for description.

As shown in FIG. 7, if the first activation function module uses an RELU-type activation function, the first activation function module includes a multiplication circuit, and the first quantization module includes a multiplication circuit. Each of the first activation function module and the first quantization module includes a multiplication circuit.

The first activation function module and the first quantization module may share a hardware module by merging an operation of the RELU-type activation function with a quantization operation.

Specifically, two multiplication operations, namely, a multiplication operation used for the weighting operation and a multiplication operation used for the operation of the RELU-type activation function, may be merged into one multiplication operation by using parameters. In this way, the first activation function module and the first quantization module share a hardware module.

For example, in a scenario in which only a weighting operation needs to be performed, the shared hardware module may be configured to perform the weighting operation. Alternatively, in a scenario in which only an operation of the RELU-type activation function needs to be performed, the shared hardware module may be configured to perform the operation of the RELU-type activation function.

Alternatively, in a scenario in which a weighting operation and an operation of the RELU-type activation function need to be performed, the hardware module may be configured to perform the weighting operation and the operation of the RELU-type activation function.

In this embodiment of this application, a multiplication operation used in the RELU-type activation function and a multiplication operation in a weighting operation are combined and merged into one multiplication operation by using parameters, so that the activation function module and the quantization module can share a hardware module, thereby reducing a requirement for operators, reducing costs, and reducing power consumption.

The following describes a process of performing a weighting operation or an operation of an activation function in a scenario in which the quantization module and the activation function module share a hardware module.

S31: Obtain input data.

The input data refers to data that is input to the shared hardware module.

For example, a hardware module shared by the first quantization module and the first activation function module in FIG. 7 is enabled. The input data may come from any module before the hardware module. In other words, dedicated modules in FIG. 7 other than the first quantization module and the first activation function module are bypassed.

For detailed description of the obtaining manner, refer to step S11. Details are not described herein again.

S32: Convert the input data into high-precision intermediate data, where the intermediate data is data of a floating point type.

"High precision" and "low precision" in embodiments of this application are relative. Precision of the input data only needs to be lower than that of the intermediate data. For example, the high-precision intermediate data may be intermediate data of an FP32 type.

S33: When the intermediate data is greater than 0, multiply the intermediate data by a quantization coefficient M7 of a weighting operation. M7 may be stored in the second memory in FIG. 7.

When the intermediate data is less than or equal to 0, a multiplication operation parameter is configured for the intermediate data based on a structure of the neural network model.

Specifically, if an operation of an activation function is not involved before or after the weighting operation, the intermediate data is multiplied by M7. The multiplication operation parameter is M7. In other words, the operation of the activation function is disabled. Alternatively, it may be understood that the shared hardware module is configured to perform only a weighting operation.

If an operation of an RELU is involved before or after the weighting operation, the intermediate data is multiplied by 0. The multiplication operation parameter is 0.

If an operation of a Leaky-RELU is involved before or after the weighting operation, the intermediate data is multiplied by a fifth coefficient M8, where M8 is a product of the weighting coefficient M7 and the Leaky-RELU coefficient. M8 may be stored in the second memory in FIG. 7.

If an operation of a PRELU is involved before or after the weighting operation, the intermediate data is multiplied by a sixth coefficient M9, where M9 is a product of the weighting coefficient M7 and the PRELU coefficient. M9 may be stored in the second memory in FIG. 7.

S34: Convert a data type of the data obtained in step S33 into a low-precision integer data type.

"High precision" and "low precision" are relative. Precision of the data obtained in step S33 only needs to be precision of the data obtained through conversion.

S35: Add the data obtained in step S34 to an integer offset (offset).

S36: Convert a data type of the data obtained in step S35 into a less-bit-width (bit) integer data type.

"More bit width" and "less bit width" are relative. The bit width of the data obtained in step S35 only needs to be less than the bit width of the data obtained through conversion.

Specifically, the bit width of the data obtained through conversion is determined based on a data type required for a subsequent operation.

For a specific implementation of step S31 to step S36, refer to the foregoing specific calculation procedure of the dequantization operation and the operation of the RELU-type activation function.

A floating point number precision conversion operation may be involved in the operation process of the neural network model. For example, in a training phase of the neural network model, a high-precision floating-point data type is usually used in a matrix operation process, and a low-precision floating-point data type is used for input matrices of the matrix operation, that is, a left matrix and a right matrix. Therefore, after the matrix operation, high-precision floating-point data needs to be converted into low-precision floating-point data, to be used for a next matrix operation.

The post-processing unit may be further configured to perform a bit width conversion operation on floating-point data. In other words, the post-processing unit may be further configured to perform a precision conversion operation on a floating point number.

As shown in FIG. 7, the first quantization module or the second quantization module may perform a bit width conversion operation on floating-point data. In other words, the bit width conversion operation on the floating-point data and an operation of a quantization type may share a hardware module, so that consumption of an operator can be reduced.

Although the output result obtained according to the Winograd algorithm is consistent with the output result obtained by the convolution operation, the output results obtained by the two are stored in different data formats. In other words, elements in output result matrices obtained by the two are stored based on different location relationships. Generally, the output result obtained according to the Winograd algorithm cannot meet a storage format of input data of a next matrix operation.

Optionally, a plurality of elements in the result of the matrix operation are arranged based on a first location relationship, and the post-processing unit is further configured to arrange the plurality of elements based on a second location relationship, to obtain a target result.

In other words, the post-processing unit may be configured to adjust a location relationship between the elements in the result of the matrix operation. To be specific, the post-processing unit may be further configured to perform a data rearrangement operation.

Further, the result of the matrix operation is an output result of a convolution operation obtained according to a Winograd algorithm, and the target result is an output result of the convolution operation.

The post-processing unit may arrange elements in an output matrix of the Winograd convolution based on storage addresses of corresponding elements in an output matrix of the convolution operation. In other words, the elements in the output matrix of the Winograd convolution are written into destination addresses of the corresponding elements in the output matrix of the convolution operation.

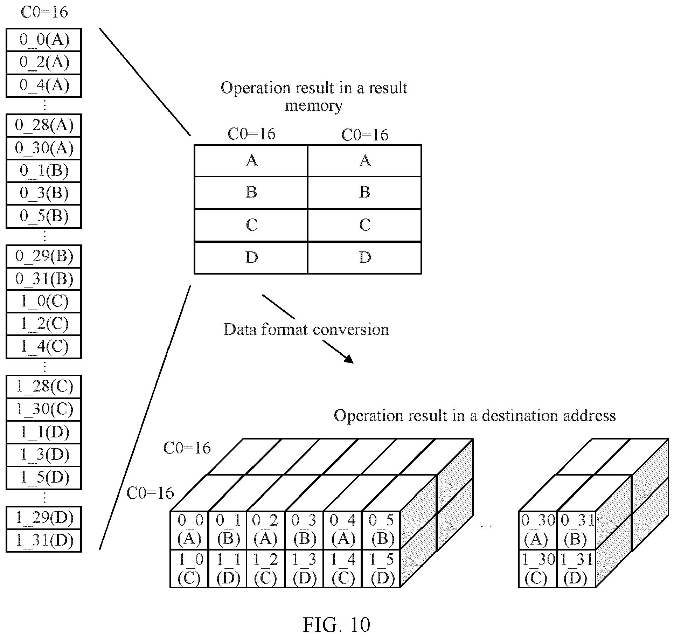

For example, a Winograd inverse transform result, that is, an output result of Winograd convolution, is generated in the matrix operation unit. The output result of the Winograd convolution is stored in the result memory based on a data format shown in FIG. 10. In FIG. 10, C0 represents a quantity of channels, each of A, B, C, and D represents a storage location of an operation result in the result memory, 0_0 represents a first element in a first row of an operation result in a destination address, 1_0 represents a first element in a second row of the operation result in the destination address, and other numbers are deduced by analogy. It should be noted that numbers in FIG. 10 are merely used to describe an arrangement manner of elements in an output result of the Winograd convolution and an arrangement manner of corresponding elements in an output result of the convolution operation, and do not have other limitation functions.

The post-processing unit may sequentially read the elements in the output result of the Winograd convolution in an order of ABCD, and write the elements into destination addresses of the corresponding elements in the output result of the convolution operation, to obtain a data format of the output result of the convolution operation, for processing by a subsequent layer.

The pooling module may be configured to perform a pooling operation.

For example, the pooling module may be configured to perform at least one of the following operations: a max pooling (max pooling) operation or an average pooling (average pooling) operation.

For example, the pooling module may be a max circuit, an add circuit, or the like.

For example, the pooling module may support an operation on data of a type such as S16 or FP16.

Further, the pooling module may perform a pooling operation in collaboration with the Winograd algorithm.

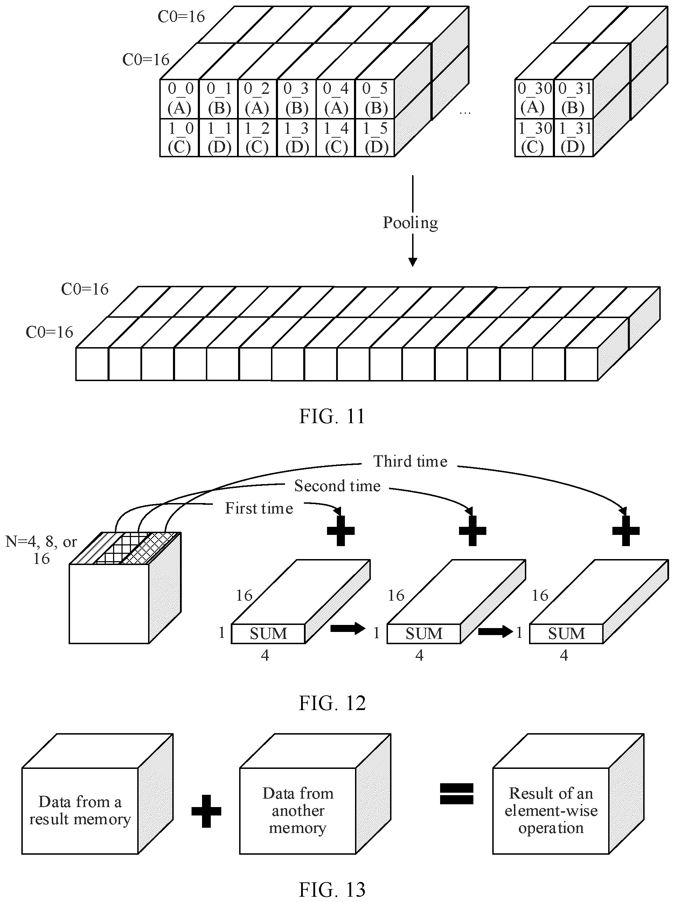

For example, an output matrix obtained by performing data rearrangement on the output result of the Winograd convolution is shown in FIG. 11. In the output matrix, each 2*2 matrix formed by elements corresponding to ABCD may be considered as an independent operation result. For a pooling operation with a stride (stride) of 2*2, the 2*2 matrix just forms a sliding window of the pooling operation with the stride of 2*2. The pooling module may separately obtain elements in the 2*2 matrix, and perform a pooling operation with a stride of 2*2 in an associated manner, to obtain a result of the pooling with the stride of 2*2. The pooling operation may be a max pooling operation, an average pooling operation, or the like.

It should be understood that a data format of the output result of the Winograd convolution and a stride of the pooling operation in FIG. 11 are merely examples, and do not constitute a limitation on the solution in this embodiment of this application.

Further, the average pooling operation includes a global average pooling (global average pooling) operation.

The global average pooling operation calculates an average value by accumulating feature values in height and width (height*width, H*W) directions of a feature map (feature map). Most of the calculation workload of the global average pooling operation is the calculation workload of accumulation of the feature values in the H*W directions.

The pooling module may perform an accumulation operation in global average pooling by using an add circuit and an intermediate register.

For example, the pooling module performs an accumulation operation in global average pooling by performing the following steps.

S41: Initialize data in an intermediate register to 0.

Specifically, the intermediate register may be initialized through instruction configuration.

S42: Obtain a part of data in input data, and accumulate the part of data into the intermediate register in an associated manner.

The input data in step S42 is data input to the pooling module. For example, the input data may be a result of a matrix operation, that is, step S42 is performed in a process of moving the data in the result memory.

For example, precision of the data in the result memory is lower than precision of the data in the intermediate register. For example, the type of the data in the result memory may be S16, and the type of the data in the intermediate register may be S32. In this way, calculation precision can be improved, and data overflow can be prevented.

As shown in FIG. 12, a quantity of channels for the result of the matrix operation is 16, that is, N is 16. A part of data in the result of the matrix operation, that is, data whose size is 1*4*16 in FIG. 12 is moved for each time, and is accumulated into the intermediate register in an associated manner. In other words, an element-wise addition operation is performed on the moved part of data in the result of the matrix operation and data in the intermediate register, and a size of an obtained summation (SUM) result is 1*4*16.

In this way, after data movement is completed, the result of the accumulation operation in global average pooling can be obtained. The pooling module may be further configured to perform a division operation on the result of the accumulation operation, to obtain a result of global average pooling. Alternatively, the pooling module may further write the result of the accumulation operation into a destination address. For example, the destination address may be the vector calculation unit. The accumulation result is output to the vector calculation unit, and the vector calculation unit performs a division operation.

The element-wise operation module is configured to perform an element-wise operation on data input to the element-wise operation module.

For example, the element-wise operation module may include an add circuit.

For example, the element-wise operation module may support an operation on data of a type such as S16 or FP16.

Input of the element-wise operation module may come from a same address, or may come from different addresses. A specific source of the input data may be determined based on a structure of the neural network model.

For example, as shown in FIG. 13, input of the element-wise operation module comes from the result memory and another memory separately. In the post-processing unit shown in FIG. 7, the data from the result memory may be obtained by bypassing a plurality of dedicated modules before the element-wise operation module.

It should be understood that in FIG. 13, only an addition operation is used as an example to describe the element-wise operation, and the element-wise operation may further include another mathematical operation.

In another example, the input of the element-wise operation module may include a processing result of a preceding dedicated module and a result of a matrix operation. In this case, the element-wise operation module obtains the processing result from the preceding dedicated module, and obtains the result of the matrix operation from the result memory.

As shown in FIG. 7, a result of the element-wise operation may be processed by a subsequent dedicated module, or may bypass a subsequent dedicated module, and may be optionally written into other memories based on different hardware architectures.

As described above, the element-wise operation module and the pooling module may share a hardware module.

In other words, the element-wise operation module may be further configured to perform a pooling operation.

For example, the element-wise operation module may be further configured to perform a part of a global averaging pooling (global average pooling) operation in an associated manner. For example, the element-wise operation module may be configured to perform an accumulation operation in the H*W directions of the feature map.

In other words, the element-wise operation module and the pooling module may share a hardware module. In this way, consumption of the operator can be further reduced.

Alternatively, the element-wise operation module may be further configured to perform another type of pooling operation, for example, perform the pooling operation in collaboration with the Winograd algorithm. For a specific implementation, refer to related descriptions of the pooling module. Details are not described herein again.

The activation function module is configured to process, according to an activation function, data input to the activation function module.

For example, the activation function includes a sigmoid function, a tanh function, an RELU-type activation function, or the like.

Further, if a quantization operation, a dequantization operation, or a weighting operation needs to be performed after the matrix operation, an operation of the RELU-type activation function may be merged with the quantization operation, the dequantization operation, or the weighting operation. For a specific description manner, refer to the foregoing description of the quantization module. Details are not described herein again.

Further, if the neural network model includes an elt-wise operation, the corresponding operation of the RELU-type activation function may be performed on distribution of data before and after the elt-wise operation.

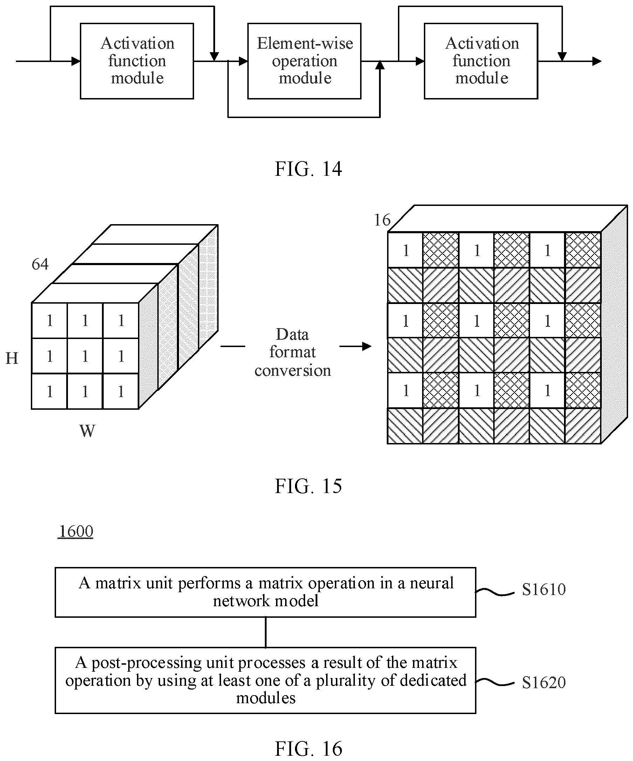

For example, as shown in FIG. 14, each of two ends of an element-wise operation module is connected to an activation function module, and the corresponding operation of the RELU-type activation function may be performed on distribution of data before and after the elt-wise operation. A bypass connection line is disposed at two ends of each of the element-wise operation module and the activation functions, and is configured to bypass a corresponding module.

In an operation process of the neural network model, a data format conversion operation may be involved. For example, in an image enhancement network, an upsampling (upsample) operation, that is, an operation of increasing a height and a width of a feature map, is usually used to improve resolution of the feature map. For example, the upsampling operation includes a conversion operation from depth data to space data (depth to space, depth2space). The depth2space conversion operation is an operation of extending a depth dimension of the feature map to a space dimension, so that resolution of the feature map can be improved without consuming computing power.

The post-processing unit may be configured to perform the conversion operation from the depth data to the space data (depth to space, depth2space).

As described above, the post-processing unit may be configured to adjust a location relationship between the elements in the result of the matrix operation, to obtain a target result.

Further, a quantity of channels for the result of the matrix operation is greater than a quantity of channels for the target result, a height of the result of the matrix operation is less than a height of the target result, and a width of the result of the matrix operation is less than a width of the target result.

FIG. 15 shows a depth2space conversion operation of converting 64 channels to 16 channels, to convert data of 48 channels of the 64 channels to locations at width and height layers of the remaining 16 channels.

For example, the conversion operation from depth data to space data (depth to space, depth2space) may include any one of the following: an operation of converting 128 channels to 32 channels, an operation of converting 128 channels to 8 channels, an operation of converting 64 channels to 16 channels, an operation of converting 64 channels to 4 channels, and an operation of converting 32 channels to 8 channels.

In addition, the post-processing unit further includes a multiplexer (multiplexer, MUX), and the MUX is configured to output a processing result of the post-processing unit.

For example, as shown in FIG. 7, the MUX may select output data from data input to the MUX, and output the output data as a processing result of the post-processing unit.

The foregoing is merely an example. The post-processing unit in FIG. 7 may be further configured to implement another function. For specific descriptions, refer to related descriptions in FIG. 5. Details are not described herein again.

The following describes a data processing method for a neural network accelerator in an embodiment of this application with reference to FIG. 16. The data processing method shown in FIG. 16 may be performed by the neural network accelerator shown in FIG. 5. For specific descriptions, refer to the foregoing related descriptions of the neural network accelerator. When the following describes the data processing method in this embodiment of this application, repeated descriptions are properly omitted.

The method 1600 shown in FIG. 16 includes step S1610 and step S1620. The following describes step S1610 and step S1620. The neural network accelerator includes a matrix unit and a post-processing unit.

S1610: The matrix unit performs a matrix operation in a neural network model.

S1620: the post-processing unit performs a part of or all vector operations in the neural network model on a result of the matrix operation by using at least one of a plurality of dedicated modules, where one of the dedicated modules is configured to perform n vector operations, and n is a positive integer less than or equal to a first threshold.

Optionally, in an implementation, the at least one dedicated module is determined based on a structure of the neural network model.

Optionally, in an implementation, the at least one dedicated module is indicated by an instruction or a parameter of a register in the post-processing unit.

Optionally, in an implementation, the plurality of dedicated modules include at least one of the following: a quantization module, an element-wise operation module, a bias operation module, an activation function module, or a pooling module, where the quantization module is configured to perform at least one of the following operations on data input to the quantization module: a quantization operation, a dequantization operation, or a weighting operation, where the data input to the quantization module is determined based on the result of the matrix operation; or the element-wise operation module is configured to perform an element-wise operation on data input to the element-wise operation module, where the data input to the element-wise operation module is determined based on the result of the matrix operation; the bias operation module is configured to perform a bias operation on data input to the bias operation module, where the data input to the bias operation module is determined based on the result of the matrix operation; the activation function module is configured to process, according to an activation function, data input to the activation function module, where the data input to the activation function module is determined based on the result of the matrix operation; and the pooling module is configured to perform pooling processing on data input to the pooling module, where the data input to the pooling module is determined based on the result of the matrix operation.

Optionally, in an implementation, the quantization module includes a first quantization module and a second quantization module, and the activation function module includes a first activation function module and a second activation function module; and the plurality of dedicated modules in the post-processing unit are connected in the following sequence: the bias operation module, the first quantization module, the first activation function module, the pooling module, the element-wise operation module, the second activation function module, and the second quantization module.

Optionally, in an implementation, the quantization module performs any one of the following operations: a quantization operation, a dequantization operation, or a weighting operation.

Optionally, in an implementation, the activation function module performs any one of the following operations: an operation of an RELU, an operation of a PRELU, or an operation of a Leaky-RELU.

Optionally, in an implementation, that the post-processing unit processes a result of the matrix operation by using at least one of a plurality of dedicated modules includes that the at least one dedicated module supports processing the result of the matrix operation in a multi-level pipeline processing manner.

Optionally, in an implementation, that the post-processing unit processes a result of the matrix operation by using at least one of a plurality of dedicated modules includes that the post-processing unit performs, in a process of moving the result of the matrix operation from a memory of the matrix unit to another memory, a vector operation on the result of the matrix operation by using the at least one dedicated module.

Optionally, in an implementation, the method further includes: the post-processing unit removes, in the process of moving the result of the matrix operation from the memory of the matrix unit to the another memory, invalid data from the result of the matrix operation.

Optionally, in an implementation, a plurality of elements in the result of the matrix operation are arranged based on a first location relationship, and the method further includes: The post-processing unit arranges the plurality of elements based on a second location relationship, to obtain a target result.

Optionally, in an implementation, a quantity of channels for the result of the matrix operation is greater than a quantity of channels for the target result, a height of the result of the matrix operation is less than a height of the target result, and a width of the result of the matrix operation is less than a width of the target result.

Optionally, in an implementation, the result of the matrix operation is an output result of a convolution operation obtained according to a Winograd algorithm, and the target result is an output result of the convolution operation.

Based on the solution in this embodiment of this application, vector operations in the neural network model are completed using one or more dedicated modules. When the neural network model includes steps of a plurality of vector operations, the plurality of vector operations may be completed using the plurality of dedicated modules respectively, thereby increasing a vector operation speed and further improving processing efficiency of the neural network model. In addition, using a vector calculation unit can be avoided as much as possible, thereby reducing a requirement for the vector calculation unit, helping optimize an area of the vector calculation unit, and improving performance and an energy efficiency ratio of the neural network accelerator. Further, decoupling from the vector calculation unit is facilitated. To be specific, no vector calculation unit is disposed in the neural network accelerator, and all vector operations in the neural network model are completed using one or more dedicated modules, thereby further improving performance and an energy efficiency ratio.

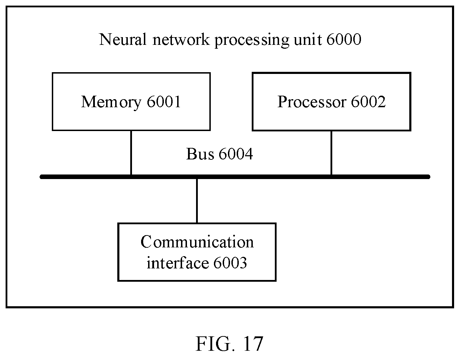

FIG. 17 is a schematic diagram of a hardware structure of a neural network accelerator according to an embodiment of this application. The neural network accelerator 6000 (the neural network accelerator 6000 may be specifically a computer device) shown in FIG. 17 includes a memory 6001, a processor 6002, a communication interface 6003, and a bus 6004. Communication connections between the memory 6001, the processor 6002, and the communication interface 6003 are implemented through the bus 6004.

The memory 6001 may be a read-only memory (read only memory, ROM), a static storage device, a dynamic storage device, or a random access memory (random access memory, RAM). The memory 6001 may store a program. When the program stored in the memory 6001 is executed by the processor 6002, the processor 6002 is configured to perform the steps of the data processing method in embodiments of this application. Specifically, the processor 6002 may perform the foregoing method 1600.

The processor 6002 includes the matrix unit and the post-processing unit in FIG. 5.

The processor 6002 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the data processing method in the method embodiment of this application.

The processor 6002 may alternatively be an integrated circuit chip and has a signal processing capability.

The processor 6002 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor can implement or execute methods, steps, and logical block diagrams disclosed in embodiments of this application. The general-purpose processor may be a microprocessor, or the processor may be any conventional processor and the like. Steps of the methods disclosed with reference to embodiments of this application may be directly performed and completed by using a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory 6001. The processor 6002 reads information in the memory 6001, and completes functions that need to be performed by units included in the apparatus shown in FIG. 5 or performs the data processing method in the method embodiment of this application in combination with hardware of the processor.

The communication interface 6003 uses a transceiver apparatus, for example, but not limited to a transceiver, to implement communication between the apparatus 6000 and another device or a communication network. For example, a neural network model may be obtained by using the communication interface 6003.

The bus 6004 may include a path for transmitting information between the components (for example, the memory 6001, the processor 6002, and the communication interface 6003) of the apparatus 6000.

It should be noted that although only the memory, the processor, and the communication interface in the apparatus 6000 are illustrated, in a specific implementation process, a person skilled in the art should understand that the apparatus 6000 may further include another component necessary for implementing proper running. In addition, based on a specific requirement, a person skilled in the art should understand that the apparatus 6000 may further include a hardware device for implementing another additional function. In addition, a person skilled in the art should understand that the apparatus 6000 may alternatively include only devices necessary for implementing this embodiment of this application, and does not need to include all devices shown in FIG. 17.

An embodiment of this application further provides a computer-readable storage medium. The computer-readable storage medium stores program code to be executed by a device, and the program code is used to perform the data processing method in embodiments of this application.

An embodiment of this application further provides a computer program product including instructions. When the computer program product is run on a computer, the computer is enabled to perform the data processing method in embodiments of this application.

An embodiment of this application further provides a chip. The chip includes a processor and a data interface. The processor reads, by using the data interface, instructions stored in a memory, to perform the data processing method in embodiments of this application.

Optionally, in an implementation, the chip may further include the memory, and the memory stores the instructions. The processor is configured to execute the instructions stored in the memory, and when the instructions are executed, the processor is configured to perform the data processing method in embodiments of this application.

An embodiment of this application further provides a system on a chip SoC, and the SoC includes the neural network accelerator in embodiments of this application.

An embodiment of this application further provides an electronic device. The electronic device includes the neural network accelerator in embodiments of this application.

It should be understood that the processor in embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor and the like.

It should be further understood that, the memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement the embodiments, all or some of the foregoing embodiments may be implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium, or the like. The semiconductor medium may be a solid state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more and "a plurality of" means two or more. "At least one of the following items (pieces)" or similar expressions refer to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples of units and algorithm steps described in the embodiments disclosed in this specification, this application may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and components displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional module and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A neural network accelerator, comprising a matrix unit and a post-processing unit, wherein

   the matrix unit is configured to perform a matrix operation in a neural network model; and
   the post-processing unit is configured to perform a part of or all vector operations in the neural network model on a result of the matrix operation by using at least one of a plurality of dedicated modules, wherein one of the dedicated modules is configured to perform n vector operations, and n is a positive integer less than or equal to a first threshold.

2. The neural network accelerator according to claim 1, wherein the at least one dedicated module is determined based on a structure of the neural network model.

3. The neural network accelerator according to claim 1 or 2, wherein the at least one dedicated module is indicated by an instruction or a parameter of a register in the post-processing unit.

4. The neural network accelerator according to any one of claims 1 to 3, wherein the plurality of dedicated modules comprise at least one of the following: a quantization module, an element-wise operation module, a bias operation module, an activation function module, or a pooling module, wherein

   the quantization module is configured to perform at least one of the following operations on data input to the quantization module: a quantization operation, a dequantization operation, or a weighting operation, wherein the data input to the quantization module is determined based on the result of the matrix operation;
   the element-wise operation module is configured to perform an element-wise operation on data input to the element-wise operation module, wherein the data input to the element-wise operation module is determined based on the result of the matrix operation;
   the bias operation module is configured to perform a bias operation on data input to the bias operation module, wherein the data input to the bias operation module is determined based on the result of the matrix operation;
   the activation function module is configured to process, according to an activation function, data input to the activation function module, wherein the data input to the activation function module is determined based on the result of the matrix operation; and

the pooling module is configured to perform pooling processing on data input to the pooling module, wherein the data input to the pooling module is determined based on the result of the matrix operation.

5. The neural network accelerator according to claim 4, wherein the quantization module comprises a first quantization module and a second quantization module, and the activation function module comprises a first activation function module and a second activation function module; and

the plurality of dedicated modules are connected in the following sequence: the bias operation module, the first quantization module, the first activation function module, the pooling module, the element-wise operation module, the second activation function module, and the second quantization module.

6. The neural network accelerator according to claim 4, wherein the quantization module is configured to perform any one of the following operations: a quantization operation, a dequantization operation, or a weighting operation.

7. The neural network accelerator according to claim 4, wherein the activation function module is configured to perform any one of the following operations: an operation of a rectified linear unit RELU, an operation of a parametric rectified linear unit PRELU, or an operation of a leaky rectified linear unit Leaky-RELU.

8. The neural network accelerator according to any one of claims 1 to 7, wherein the plurality of dedicated modules support a multi-level pipeline processing manner.

9. The neural network accelerator according to any one of claims 1 to 8, wherein the post-processing unit is specifically configured to:

perform, in a process of moving the result of the matrix operation from a memory of the matrix unit to another memory, a vector operation on the result of the matrix operation by using the at least one dedicated module.

10. The neural network accelerator according to claim 9, wherein the post-processing unit is further configured to:
remove, in the process of moving the result of the matrix operation from the memory of the matrix unit to the another memory, invalid data from the result of the matrix operation.

11. The neural network accelerator according to any one of claims 1 to 10, wherein a plurality of elements in the result of the matrix operation are arranged based on a first location relationship, and the post-processing unit is further configured to arrange the plurality of elements based on a second location relationship, to obtain a target result.

12. The neural network accelerator according to claim 11, wherein a quantity of channels for the result of the matrix operation is greater than a quantity of channels for the target result, a height of the result of the matrix operation is less than a height of the target result, and a width of the result of the matrix operation is less than a width of the target result.

13. The neural network accelerator according to claim 11, wherein the result of the matrix operation is an output result of a convolution operation obtained according to a Winograd algorithm, and the target result is an output result of the convolution operation.

14. A data processing method for a neural network accelerator, wherein the neural network accelerator comprises a matrix unit and a post-processing unit, and the method comprises:

performing, by the matrix unit, a matrix operation in a neural network model; and
performing, by the post-processing unit, a part of or all vector operations in the neural network model on a result of the matrix operation by using at least one of a plurality of dedicated modules, wherein one of the dedicated modules is configured to perform n vector operations, and n is a positive integer less than or equal to a first threshold.

15. The method according to claim 14, wherein the at least one dedicated module is determined based on a structure of the neural network model.

16. The method according to claim 14 or 15, wherein the at least one dedicated module is indicated by an instruction or a parameter of a register in the post-processing unit.

**17.** The method according to any one of claims 14 to 16, wherein the plurality of dedicated modules comprise at least one of the following: a quantization module, an element-wise operation module, a bias operation module, an activation function module, or a pooling module, wherein

the quantization module is configured to perform at least one of the following operations on data input to the quantization module: a quantization operation, a dequantization operation, or a weighting operation, wherein the data input to the quantization module is determined based on the result of the matrix operation; or
the element-wise operation module is configured to perform an element-wise operation on data input to the element-wise operation module, wherein the data input to the element-wise operation module is determined based on the result of the matrix operation;
the bias operation module is configured to perform a bias operation on data input to the bias operation module, wherein the data input to the bias operation module is determined based on the result of the matrix operation;
the activation function module is configured to process, according to an activation function, data input to the activation function module, wherein the data input to the activation function module is determined based on the result of the matrix operation; and
the pooling module is configured to perform pooling processing on data input to the pooling module, wherein the data input to the pooling module is determined based on the result of the matrix operation.

**18.** The method according to claim 17, wherein the quantization module comprises a first quantization module and a second quantization module, and the activation function module comprises a first activation function module and a second activation function module; and
the plurality of dedicated modules in the post-processing unit are connected in the following sequence: the bias operation module, the first quantization module, the first activation function module, the pooling module, the element-wise operation module, the second activation function module, and the second quantization module.

**19.** The method according to claim 17, wherein the quantization module performs any one of the following operations: a quantization operation, a dequantization operation, or a weighting operation.

**20.** The method according to claim 17, wherein the activation function module performs any one of the following operations: an operation of an RELU, an operation of a PRELU, or an operation of a Leaky-RELU.

**21.** The method according to any one of claims 14 to 20, wherein the processing, by the post-processing unit, a result of the matrix operation by using at least one of a plurality of dedicated modules comprises: supporting, by the at least one dedicated module, processing the result of the matrix operation in a multi-level pipeline processing manner.

**22.** The method according to any one of claims 14 to 21, wherein the processing, by the post-processing unit, a result of the matrix operation by using at least one of a plurality of dedicated modules comprises: performing, by the post-processing unit in a process of moving the result of the matrix operation from a memory of the matrix unit to another memory, a vector operation on the result of the matrix operation by using the at least one dedicated module.

**23.** The method according to claim 22, wherein the method further comprises: removing, by the post-processing unit in the process of moving the result of the matrix operation from the memory of the matrix unit to the another memory, invalid data from the result of the matrix operation.

**24.** The method according to any one of claims 14 to 23, wherein a plurality of elements in the result of the matrix operation are arranged based on a first location relationship, and the method further comprises: arranging, by the post-processing unit, the plurality of elements based on a second location relationship, to obtain a target result.

**25.** The method according to claim 24, wherein a quantity of channels for the result of the matrix operation is greater than a quantity of channels for the target result, a height of the result of the matrix operation is less than a height of the target result, and a width of the result of the matrix operation is less than a width of the target result.

**26.** The method according to claim 24, wherein the result of the matrix operation is an output result of a convolution operation obtained according to a Winograd algorithm, and the target result is an output result of the convolution operation.

**27.** A chip, wherein the chip comprises a processor and a data interface, and the processor reads, through the data interface, instructions stored in a memory to perform the method according to any one of claims 14 to 26.

**28.** A system on a chip SoC, comprising the neural network accelerator according to any one of claims 1 to 13.

**29.** An electronic device, comprising the neural network accelerator according to any one of claims 1 to 13.

FIG. 1

Processing result of
an image

Fully
connected
layer 230

Output layer 240

Hidden layer n (23n)

Hidden layer 2 (232)

Hidden layer 1 (231)

Convolutional
layer/Pooling
layer
220

226

225

224

223

222

221

Convolutional
neural
network
(CNN)
200

Input layer 210

To-be-processed
image

FIG. 2

FIG. 3

FIG. 4

FIG. 5

src → | Bias operation module | → | First quantization module | → | First activation function module | → | Element-wise operation module/Pooling module | → | Second quantization module | → | Second activation function module | → dst

FIG. 6

Post-processing unit 520

Second memory

Memory

GEMM unit/ Convolution unit

Bias operation module

First quantization module

First activation function module

Pooling module

Element-wise operation module

Second quantization module

Second activation function module

MUX

Post-processing operation unit

FIG. 7

Real data

Invalid data

Left matrix    Right matrix    Result

Remove
invalid data

M=16    ✕    =    M=16    ⟶    M=8

K=32    N=16    N=16    N=8

FIG. 8

(a)    (b)

FIG. 9

CO=16

| 0_0(A) |
| 0_2(A) |
| 0_4(A) |
| ⋮ |
| 0_28(A) |
| 0_30(A) |
| 0_1(B) |
| 0_3(B) |
| 0_5(B) |
| ⋮ |
| 0_29(B) |
| 0_31(B) |
| 1_0(C) |
| 1_2(C) |
| 1_4(C) |
| ⋮ |
| 1_28(C) |
| 1_30(C) |
| 1_1(D) |
| 1_3(D) |
| 1_5(D) |
| ⋮ |
| 1_29(D) |
| 1_31(D) |

Operation result in a result memory

| CO=16 | CO=16 |
|---|---|
| A | A |
| B | B |
| C | C |
| D | D |

Data format conversion

Operation result in a destination address

FIG. 10

FIG. 11

FIG. 12

FIG. 13

FIG. 14

FIG. 15

1600

FIG. 16

Neural network processing unit 6000

Memory 6001

Processor 6002

Bus 6004

Communication
interface 6003

FIG. 17

## INTERNATIONAL SEARCH REPORT

| International application No. |
| --- |
| **PCT/CN2021/110067** |

| A. CLASSIFICATION OF SUBJECT MATTER |
| --- |
| G06N 3/063(2006.01)i;  G06N 3/08(2006.01)i;  G06N 3/04(2006.01)i |
| According to International Patent Classification (IPC) or to both national classification and IPC |

| B. FIELDS SEARCHED |
| --- |
| Minimum documentation searched (classification system followed by classification symbols) |
| G06N |
| Documentation searched other than minimum documentation to the extent that such documents are included in the fields searched |
| |
| Electronic data base consulted during the international search (name of data base and, where practicable, search terms used) |
| CNABS; CNTXT; CNKI; VEN; DWPI; USTXT; WOTXT; EPTXT: 神经网络, 加速器, 卷积, 多个, 后处理, 并行, 量化, 激活, 池化, 偏置, neural network, accelerator, convolution, several, aftertreatment, parallel, quantify, activate, pooling, offset |

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 112766470 A (HORIZON ROBOTICS (SHANGHAI) ARTIFICIAL INTELLIGENCE TECHNOLOGY CO., LTD.) 07 May 2021 (2021-05-07) description, paragraphs [0032]-[0127], and figure 5 | 1-3, 8, 11-16, 21, 24-29 |
| Y | CN 112766470 A (HORIZON ROBOTICS (SHANGHAI) ARTIFICIAL INTELLIGENCE TECHNOLOGY CO., LTD.) 07 May 2021 (2021-05-07) description, paragraphs [0032]-[0127], and figure 5 | 4-7, 9, 10, 17-20, 22, 23 |
| Y | CN 112334885 A (AIMOTIVE KFT) 05 February 2021 (2021-02-05) description, paragraphs [0074]-[0200], and figure 4 | 4-7, 9, 10, 17-20, 22, 23 |
| A | CN 111667051 A (SHANGHAI STARFIVE TECHNOLOGY CO., LTD.) 15 September 2020 (2020-09-15) entire document | 1-29 |
| A | US 2020097728 A1 (APICAL LTD.) 26 March 2020 (2020-03-26) entire document | 1-29 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 January 2022** | **17 March 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/110067**

| Patent document cited in search report | | | Publication date (day/month/year) | Patent family member(s) | | | Publication date (day/month/year) |
|---|---|---|---|---|---|---|---|
| CN | 112766470 | A | 07 May 2021 | None | | | |
| CN | 112334885 | A | 05 February 2021 | WO | 2019201657 | A1 | 24 October 2019 |
| | | | | EP | 3557425 | A1 | 23 October 2019 |
| | | | | US | 2021173787 | A1 | 10 June 2021 |
| | | | | KR | 20200143686 | A | 24 December 2020 |
| | | | | JP | 2021521516 | A | 26 August 2021 |
| CN | 111667051 | A | 15 September 2020 | None | | | |
| US | 2020097728 | A1 | 26 March 2020 | US | 10839222 | B2 | 17 November 2020 |

Form PCT/ISA/210 (patent family annex) (January 2015)